# FASCICULE DE BREVET EUROPEEN

(11) **EP 3 362 585 B1**
(45) Date de publication et mention de la délivrance du brevet: **27.11.2024**
(21) Numéro de dépôt: 16790437.4
(22) Date de dépôt: 17.10.2016
(51) Int. Cl.: C22C 38/00, C22C 38/02, C22C 38/06, C22C 38/08, C22C 38/10, C22C 38/12, C22C 38/14, C21D 9/30, C21D 9/46, C22B 9/20, C22C 1/02, C21D 1/06, C21D 7/06, C21D 8/02, C22C 38/04, C22C 38/44, C22C 38/52

(54) **ACIER, PRODUIT RÉALISÉ EN CET ACIER, ET SON PROCÉDÉ DE FABRICATION**
STAHL, PRODUKT AUSH DEM STAHL UND VERFAHREN ZUR HERSTELLUNG
STEEL, PRODUCT MADE OF THAT STEEL AND METHOD TO OBTAIN THE STEEL

(30) Priorité: 15.10.2015 WO PCT/IB2015/057939
(43) Date de publication de la demande: 22.08.2018
(73) Titulaire: Aperam, 1882 Luxembourg (LU)
(72) Inventeur: PERRIN GUERIN, Valérie, 58160 Imphy (FR)
(74) Mandataire: Lavoix
(86) Numéro de dépôt international: PCT/IB2016/056221
(87) Numéro de publication internationale: WO 2017/064684

(56) Documents cités:
- EP-A1- 2 412 836
- EP-A1- 3 286 349
- EP-B1- 1 339 880
- EP-B1- 2 180 073
- EP-B1- 2 412 836
- JP-A- 2007 186 780
- JP-A- 2008 088 540
- JP-A- H01 142 021

## Description

L'invention concerne le domaine des aciers dits « maraging », utilisés notamment pour des applications nécessitant une ou plusieurs des propriétés suivantes : excellentes propriétés mécaniques (très bonne tenue en fatigue, haute limite élastique et résistance à la rupture élevée), simplicité de traitement thermique et stabilité dimensionnelle à l'issue de ces traitements, facilité de soudage et bonne aptitude au formage.

Ces aciers maraging se caractérisent par une structure martensitique, pouvant être vieillie, de façon à obtenir, à l'issue d'un vieillissement de l'acier, un durcissement par précipitation de phases intermétalliques favorables à l'obtention de propriétés mécaniques élevées.

On connaît classiquement des aciers maraging, de type M 250, de composition typique (exprimée en pourcentages pondéraux, comme le seront toutes les compositions données par la suite) Ni = 18%, Co = 9%, Ti = 0,45% (nuance dite X2NiCoMo18-9-5), contenant du Ti comme élément durcissant le reste étant généralement du fer et des impuretés résultant de l'élaboration. Ils sont utilisés pour réaliser, notamment, des pièces à hautes propriétés, aptes à être utilisées aussi bien comme pièces massives (arbres de moteurs, pales de centrifugeuse...) que comme pièces de précision à performances élevées : ressorts pour l'horlogerie, lames pour fleurets, éléments de courroies de transmission automatique de type CVT (Continuous Variable Transmission) pour, notamment, des automobiles ou des véhicules en général, ou des machines-outils ou autres machines tournantes... Dans le cas d'applications où la pièce est sollicitée en fatigue, il est habituel de procéder, en plus du vieillissement, à un traitement superficiel de durcissement de la pièce par nitruration, carbonitruration, grenaillage, cémentation...

On connaît aussi, par le document EP-B1-1 339 880, des aciers maraging exempts de Ti dont la composition est: Ni = 12 à 24,5% ; Mo = 2,5% ; Co = 4,17% ; Al ≤ 0,15% ; Ti ≤ 0,1% ; N ≤ 30 ppm ; Si ≤ 0,1% ; Mn ≤ 0,1% ; C ≤ 50 ppm ; S ≤ 10 ppm ; P ≤ 50 ppm ; H ≤ 3 ppm ; O ≤ 10 ppm ; le reste étant du Fe et des impuretés résultant de l'élaboration, avec Ni + Mo compris entre 20 et 27% ; Co% x Mo% compris entre 50 et 200 ; Ti% x N% ≤ 2.10⁻⁴, qui sont produits par des méthodes incluant des traitements de refusion sous vide de type VIM (Vacuum Induction Melting) et/ou VAR (Vacuum Arc Remelting), éventuellement couplées à un traitement par refusion sous laitier électroconducteur ESR (ElectroSlag Remelting). Ces aciers sont ensuite transformés à chaud et à froid pour obtenir des bandes de faible épaisseur (1 mm ou moins par exemple). Après mise en forme de la pièce, on procède à un traitement de durcissement par précipitation qui confère à la pièce ses propriétés mécaniques à coeur ; un traitement de surface ultérieur pourra conférer à la pièce des propriétés accrues en surface concernant la sollicitation en fatigue, la friction statique, le frottement dynamique...

Les documents EP 2 412 836 A1, EP 2 180 073 B1, JP 2007 186 780, JP 2008 088540 A et JP H 01 142021 A portent aussi sur des aciers maraging.

Par rapport à des aciers maraging précédemment connus contenant environ 18% de Ni, 9% de Co, 5% de Mo, 0,5% de Ti, et un peu d'AI, ces aciers de EP-B1-1 339 880 se distinguent par une tenue en fatigue supérieure (à l'état vieilli nitruré), associée à une propreté inclusionnaire contrôlée et une endurance en fatigue. De manière plus détaillée : les propriétés mécaniques sur produit laminé à froid visées sont Ar > 2.5%, Rp_{0.2} < 1140 MPa, Rm < 1480 MPa ; sur état vieilli, Rp_{0.2} > 1770 MPa, Rm > 1800 MPa ; enfin sur état nitruré les propriétés visées sont Ar > 1% ; Rm > 1930 MPa.

On connaît également par le document EP-B1-2 180 073 des aciers maraging à hautes tenue en fatigue et résistance à la traction destinés à des courroies CVT, de composition : C ≤ 100 ppm ; Si ≤ 0,1% ; Mn ≤ 0,1% ; P ≤ 0,01% ; S ≤ 50 ppm ; Ni = 17 - 22% ; Cr = 0,1-4,0% ; Mo = 3,0-7,0% ; Co = 10,0-20,0% ; Ti ≤ 0,1% ; Al ≤ 0,05% ; N ≤ 300 ppm ; O ≤ 50 ppm ; 0 < B ≤ 0,01% ; une présence optionnelle de jusqu'à 0,01% de Ca, jusqu'à 0,005% de Mg, jusqu'à 0,01% de Zr, le reste étant du Fe et des impuretés, avec Co/3 + Mo + 4AI compris entre 8,0 et 15,0%. De préférence les traitements thermiques et thermomécaniques subis leur confèrent un grain très fin, de ASTM 10 ou plus.

On connait également par la demande de brevet PCT/IB2015/052975 au nom du demandeur des aciers maraging combinant une composition à faible teneur en carbone et une population inclusionnaire maîtrisée, dont la teneur en Co est comprise entre 1 et 25% et la teneur en Mo entre 1 et 12%. La somme Mo + Co auxquels peuvent s'ajouter des éléments durcissants est comprise entre 20 et 29%, et la somme Ni + Co + Mo est d'au moins 29%. Les teneurs les plus recommandées en éléments coûteux y demeurent cependant relativement élevées.

Le but de l'invention est de proposer un nouveau type d'aciers maraging qui présente un coût matière aussi bas que possible associé à des propriétés mécaniques élevées. Autrement dit, pour une application dans laquelle le produit final serait particulièrement sollicité en fatigue l'acier devrait présenter le meilleur compromis possible entre un coût matière relativement faible et de très bonnes caractéristiques mécaniques intrinsèques, associées à d'excellentes propriétés de surface, concernant le comportement en nitruration par exemple, que, notamment, les aciers que l'on vient de décrire. Une résistance à la traction et/ou une résistance à la fatigue suffisantes pour les applications précitées seraient des propriétés recherchées, alliées à des propriétés en surface accrues, notamment la capacité à former, lors d'un traitement de surface, une couche nitrurée, carbonitrurée, cémentée, grenaillée ou autres. Cette couche doit être capable d'introduire en surface des contraintes résiduelles permettant de retarder la fissuration en sollicitation cyclique pour une mise en compression des couches surfaciques. L'effet des traitements de surface peut être aussi évalué par exemple au travers de la dureté conférée au produit en surface, du niveau relatif de contraintes résiduelles et de la nature des phases formées.

A cet effet, l'invention a pour objet un acier selon la revendication 1.

L'invention a également pour objet un produit en acier selon la revendication 2 ou selon la revendication 3.

L'invention a également pour objet une tôle ou bande laminée à froid selon la revendication 4.

Les revendications 5 et 6 décrivent des caractéristiques particulières de la tôle ou bande laminée à froid.

L'invention a également pour objet un produit en acier selon la revendication 7 ou selon la revendication 8.

L'invention a également pour objet un arbre de turbine selon la revendication 9 ou une pièce de transmission selon la revendication 10.

L'invention a également pour objet une courroie de transmission selon la revendication 11 ou selon la revendication 12.

L'invention a également pour objet un produit en acier selon la revendication 13.

Comme on l'aura compris, l'invention consiste, pour réaliser les économies visées par rapport à l'art antérieur connu, à abaisser les teneurs maximales obligatoires ou préférées de certains éléments comme le Co, voire aussi le Mo, par rapport à ce qui était précédemment recommandé, et à compenser cet abaissement par la présence obligatoire à des teneurs définies d'éléments durcissants du type, Cu, Nb, Mn, Si, AI, Ta, V, W et autres qui ne sont pas systématiquement utilisés habituellement. Ces nuances autorisent des structures majoritairement martensitiques typiques des aciers maraging, ou aussi des structures mixtes austéno-ferritiques. L'invention consiste en un compromis entre coût matière et performances mécaniques, conférées par des performances mécaniques dues à la composition de l'acier et aux traitements thermomécaniques ou thermiques qu'il subit, alliées à une population d'inclusions non-métalliques (oxydes, sulfures, nitrures essentiellement) contrôlée, répondant à des critères précis de nombre, de répartition, de distribution en tailles et de composition.

Cette population peut être obtenue après une élaboration soignée du métal liquide grâce à une combinaison de différents procédés d'élaboration et de conditions maîtrisées par les opérateurs. En particulier, il est conseillé d'utiliser des revêtements réfractaires neufs ou pas encore trop dégradés dans les récipients comme le four de fusion et les poches de traitement du métal liquide, et, pour empêcher les réoxydations et renitrurations, d'éviter les contacts entre le métal liquide et l'atmosphère par l'utilisation de traitements sous vide, et aussi de gaz neutres protecteurs (argon) lorsque le métal est exposé à l'air ou risque de l'être. Il faut, aussi, bien maîtriser l'agitation du métal liquide dans les récipients d'élaboration où elle est pratiquée (par des moyens électromagnétiques ou par injection de gaz neutre, notamment), de façon à accélérer la décantation des inclusions sans, en contrepartie, capter des impuretés oxydées ou autres du fait, notamment, d'une érosion des réfractaires ou d'une captation d'impuretés arrachées au laitier surmontant le métal liquide. Ces précautions sont connues en elles-mêmes de l'homme du métier, mais il est important qu'elles soient appliquées au mieux de l'état de l'art connu, dans le cadre de l'invention, pour que l'on ne dépasse pas le seuil d'acceptabilité de la présence d'inclusions d'oxydes, nitrures ou sulfures dans le produit final, tel qu'il est fixé selon l'invention.

Il s'avère également que les aciers selon l'invention, notamment lorsqu'ils sont riches en Cr ou en Mn ou, surtout, en Cr et Mn, se prêtent particulièrement bien à l'obtention ultérieure d'une couche nitrurée dont le comportement mécanique (faibles capacités de déformation plastique) procure d'importants avantages lors, notamment, de l'utilisation privilégiée de ces aciers pour fabriquer des éléments de courroies de transmission CVT. Cu et Nb sont aussi favorables de ce point de vue.

L'invention sera mieux comprise à la lecture de la description qui suit, donnée en référence aux figures annexées suivantes :
- La figure 1 illustre les précipités durcissants obtenus sur l'échantillon Inv 15 après nitruration gazeuse par caractérisation au microscope électronique à transmission sur lame mince ;
- La figure 2 qui montre une caractérisation des couches nitrurées par leurs niveaux de micro-dureté en surface, effectuée sur des échantillons de référence et sur des échantillons d'un acier selon l'invention ;
- La figure 3 qui montre une caractérisation des couches nitrurées par leurs contraintes résiduelles en surface, effectuée sur des échantillons de référence et sur des échantillons d'un acier selon l'invention ;
- La figure 4 qui illustre le comportement élastique de la couche nitrurée à partir des profondeurs de pénétration et des profondeurs résiduelles lors de scratch tests effectués sur deux échantillons selon l'invention à l'état nitruré ;
- La figure 5 qui montre l'évolution de l'émission acoustique lors de scratch tests à charge croissante effectués sur les mêmes échantillons que ceux de la figure 4 ;
- La figure 6 qui illustre le comportement élastique lors de scratch tests effectués sur quatre échantillons selon l'invention et un échantillon de référence, tous à l'état nitruré.

La composition de l'acier (exprimée en pourcentages pondéraux) est motivée par les considérations suivantes.

La teneur en Ni est comprise entre 10,0 et 24,5%, de préférence entre 12,0 et 24,5%. C'est à cette condition que :
- d'une part, on obtient par les traitements thermiques habituels une structure fortement martensitique, c'est-à-dire représentant au moins30%, mieux au moins 50% en surface de la structure visible sur une micrographie. Une teneur en Ni de plus de 24,5%, combinée aux teneurs requises pour les autres éléments, ne permettrait pas d'obtenir une telle structure quels que soient les traitements thermiques mis en oeuvre ;
- d'autre part, après le durcissement par précipitation, on obtient des propriétés de ductilité, dilatation, limite élastique, ténacité K1C particulièrement favorables pour les applications envisagées ; une teneur en Ni minimale de 10,0%, associée à des proportions définies de Co, Mo et autres éléments métalliques, est adaptée à cette obtention. Une teneur en Ni minimale de 12,0% est encore préférée pour obtenir cet effet de façon satisfaisante.

La teneur en Mo est comprise entre 1,0 et 12,0%. Cet élément permet le durcissement structural en formant, lors du vieillissement, des intermétalliques Fe₂Mo, MoNi₃ et autres, fins et dispersés. Optimalement, la teneur en Mo est de 2,5 à 7,0% pour obtenir à la fois un effet très significatif du Mo et des intermétalliques de taille optimale pour assurer l'homogénéité des propriétés mécaniques. La limite supérieure en Mo est donnée par le souhait de conserver des structures majoritairement martensitiques, aptes au durcissement par vieillissement.

Cet élément étant coûteux, on a intérêt à ne pas en rajouter une quantité qui pourrait être superflue, ses effets sur le durcissement structural pouvant être en partie assurés par d'autres éléments plus économiques.

Mo intervient aussi dans la constitution et les propriétés des couches nitrurées qui comportent des précipités fins et dispersés de natures différentes selon les conditions de la nitruration (précipités de types Mo₂N, FeₓMo_{y}N_{z} ...).

La teneur en Co est comprise entre 1,0 et 18,0%. Cet élément stabilise la structure martensitique, élève les températures de solidus et participe de manière indirecte au durcissement en favorisant la précipitation des intermétalliques. Si les proportions de Co mises en oeuvre sont plus élevées que 18,0%, l'addition devient très coûteuse (à cause du prix élevé du Co), et les propriétés de l'acier peuvent être significativement modifiées si, par ailleurs, les teneurs des autres éléments restent dans les limites de l'invention. De préférence, on a une teneur en Co de 4,0 à 18, 0%, mieux de 7,0% à 16,0%, encore mieux de 8,0% à 15,0%.

Si Co et Mo sont à des teneurs contrôlées qui peuvent être relativement modérées par rapport à ce qui est usuel, il faut compléter leur action par l'addition d'un ou plusieurs des éléments durcissants Si, Mn, Cu, W, V, Nb, Zr, C, Al, B, Y, Ta, Cr, Ti, N, dans les limites qui sont précisées par ailleurs. C'est une des façons, selon l'invention, de diminuer le coût de l'acier tout en lui conservant des propriétés élevées dues au durcissement structural, en particulier si ces éléments durcissants de substitution sont choisis parmi les moins coûteux d'entre eux. On retrouve la problématique signalée plus haut à propos du Mo.

La conséquence de cette exigence sur la nécessité d'avoir des quantités suffisantes de Co est que la somme des éléments durcissants Mo + Co + Si + Mn + Cu + W + V + Nb + Zr + Ta + Cr + C + AI + B + Y + Ti + N est comprise entre 14,0 et 29,0% de préférence entre 15,0 et 27,0%, mieux entre 17,0 et 26,0%. Cela implique que comme la teneur en Co est d'au moins de 1%, de préférence au moins 4%, on devra souvent ajouter au moins un élément choisi parmi Si, Mn, Cu, W, V, Nb, Zr, Ta, Cr, C, AI, Y et B (dans les limites prescrites par ailleurs), compte tenu du fait que Mo n'est jamais supérieur à 12% (pour des raisons économiques comparables à celles conduisant à limiter la teneur en Co) et de préférence pas supérieur à 7,0%.

La limite inférieure de 14,0% pour cette somme est justifiée par l'obtention d'un effet durcissant suffisant. Au-delà de 29,0%, les propriétés magnétiques et les conditions de mise en oeuvre du matériau s'en voient significativement modifiées. De préférence, la limite inférieure est de 15,0%, mieux 17,0%, pour obtenir les valeurs d'usage requises par les applications les plus exigeantes envisagées tout en conservant une nuance économique.

Les teneurs en Ni, Co, Mo sont également dépendantes les unes des autres, en ce que :
- le Ni améliore la ductilité (aux basses températures notamment), et permet de contrôler la dilatation et le module d'élasticité ; il a aussi un effet sur la ténacité et le rapport Re/Rm ; ses teneurs sont encadrées : en borne inférieure pour bénéficier des propriétés favorables que l'on a citées (en général dès 5% pour les alliages), et en borne supérieure pour ne pas gêner la transformation martensitique du fait de son caractère gammagène ; à cet effet, les influences de Co et Mo sont aussi à prendre en compte ;
- le Mo est ajouté à des fins de durcissement structural par la précipitation d'intermétalliques ; et, afin de viser les propriétés en rupture des nuances maraging, il convient d'avoir une structure martensitique à vieillissement ; le Mo intervient dans ce durcissement comme on l'a dit plus haut (dès 1%) et peut participer au durcissement structural de manière conjointe aux éléments d'addition proposés (comme le Nb par exemple) ; le Mo participe aussi à la nitruration des surfaces par son affinité avec l'azote (dès quelques %). Enfin, il ne trouve ses limites que dans la formation de phases fragilisantes (phases de Laves, σ, µ, θ, δ...), pouvant être associées aux ségrégations locales ; sa limite supérieure est de 12,0%.

Enfin, concernant la formation d'une structure martensitique vieillissante, les éléments Co et Mo agissent conjointement quant à la précipitation de phases durcissantes, mais de manière dissociée quant à la stabilisation des structures ferritiques. Afin d'unifier ces tendances, une formule est proposée pour garantir préférentiellement une température Ms située au-delà de la température ambiante :
21,5% ≤ Ni + Co + Mo ≤ 47,5%, de préférence 25,0% ≤ Ni + Co + Mo ≤ 40,0%.

La teneur en Al est comprise entre des traces et 2,0%. AI n'est pas obligatoirement ajouté, mais il fait partie des éléments qu'on peut utiliser pour compenser les basses teneurs en Co au regard des performances mécaniques. On peut réduire sa présence au niveau de celle d'un élément résiduel, résultant de la quantité qu'il a été, éventuellement, nécessaire d'ajouter pour la désoxydation initiale du métal liquide au cours de l'élaboration, ou procéder à un ajout volontaire d'AI pour obtenir des propriétés spécifiques. Pour un coût modéré, il augmente la résilience et peut participer au durcissement structural. Egalement, il limite l'oxydation pendant l'élaboration du métal liquide et les transformations du métal solidifié. Mais il faut éviter de former des inclusions de tailles significatives lors des procédés à chaud (types nitrures et oxydes contenant de l'aluminium) afin de ne pas dégrader la tenue en fatigue et la ténacité. La limitation de la présence d'AI à la teneur de moins de 2,0% permet de limiter ce risque. En tout cas, une présence significative d'AI doit aller de pair avec des conditions d'élaboration soignées, qui évitent les réoxydations importantes du métal liquide et qui favorisent l'élimination, par décantation et piégeage dans un laitier, des amas d'inclusions d'alumine qui ont pu résulter de la désoxydation et des réoxydations.

Comme le Ti, l'aluminium favorise la nitruration mais ne permet pas de contrôler aisément les phases formées. Ainsi, des précipités de taille non maitrisée peuvent se former à différentes étapes de l'élaboration de l'acier liquide et des transformations du demi-produit solidifié, et ils peuvent avoir un rôle dramatique pour les propriétés en fatigue.

La teneur en Ti est donc comprise entre des traces et 0,1%. En évitant une présence significative de Ti (que d'autres aciers maraging exigent, au contraire de ceux de l'invention), on vise à empêcher la formation de nitrures de Ti au cours de la solidification du métal liquide, qui détériorent la tenue en fatigue du produit final. Dans l'invention, on obtient par d'autres moyens le durcissement structural désiré.

La teneur en N, qui est d'au plus 0,010%, peut être imposée à un bas niveau en présence d'éléments d'addition nitrurables (type Al, Ti), pour éviter la formation de nitrures en phase liquide autant que possible. En dehors de ces cas, ou si les nitrures les plus nocifs peuvent être assurément éliminés par décantation lors de l'élaboration et de la coulée, la teneur en N tolérable d'au plus 0,010% est souvent simplement procurée de façon subie, par la qualité des matières premières et les procédés d'élaboration et de coulée du métal liquide.

La teneur en Si est comprise entre des traces et 2,0%. Il peut être utilisé pour la désoxydation du métal liquide lors de l'élaboration, et il fait partie des éléments qu'on peut utiliser pour compenser les relativement faibles teneurs en Co. La présence de Si peut aussi contribuer, même en présence d'AI, à une captation d'une partie de l'oxygène dissous, qui sera donc moins disponible pour former de gros amas d'alumine néfastes. Mais il faut veiller à éviter de former de gros oxydes contenant du Si dans l'acier solidifié final, d'où la limite supérieure de 2,0%. Si accroît la solubilité de certains éléments et ainsi homogénéise la structure. Il améliore enfin la limite élastique. Cette teneur maximale en Si relativement élevée est acceptable dans la mesure où les précautions nécessaires pour obtenir une population inclusionnaire conforme à l'invention ont été prises lors de l'élaboration et de la coulée.

La teneur en Mn est comprise entre des traces et 13,0%, et entre des traces et 4,0% de préférence, mieux entre 0,14% et 4,0%. Le Mn améliore la nitruration, comme il accroît la solubilité de l'azote en phase solide. Il piège aussi le soufre libre, et permet ainsi de limiter les fragilités lors de la transformation à chaud. Mn est de plus un désoxydant efficace, et peut agir sur ce point en synergie avec le Si, et la captation par Mn d'une partie de l'oxygène dissous, comme pour Si et aussi Cr (voir plus loin), permet de répartir l'oxygène dissous entre différents éléments autres que Al, et ainsi de limiter le risque de formation de gros amas d'inclusions d'alumine. Il faut cependant, de préférence, limiter sa teneur à 4,0% pour éviter de former des phases néfastes quant aux propriétés mécaniques et éviter d'accroitre de manière drastique la proportion d'austénite. Le Mn favorise la stabilisation de nuances biphasées ferrito-austénitiques (contenant moins de 70% de martensite) aux propriétés à ajuster. Dans ce contexte ses proportions doivent être finement ajustées, au même titre que les conditions de traitement thermiques et déformations mécaniques, afin de contrôler précisément les transformations de phases et propriétés qui en découlent. Une teneur excédant 13,0% risque de conduire à la formation d'inclusions ou de phases riches en Mn, de dimensions importantes, ainsi qu'à des proportions d'austénite importantes, qui peuvent dégrader les propriétés mécaniques.

Un minimum de 0,14% peut être préféré pour commencer à bénéficier significativement des avantages précités du Mn.

Indépendamment des conditions préférées posées individuellement sur Si et Mn, la somme Si + Mn est d'au moins 0,13%. Ce faisant, d'une part, on assure la présence en quantité significative d'au moins un élément désoxydant autre que l'AI éventuellement présent, cet autre désoxydant (de même que Cr) contribuant à limiter la quantité d'O piégée par Al avec le risque de former des gros amas d'alumine ; d'autre part, Si et Mn font partie des éléments durcissants que l'on ajoute préférentiellement, selon l'invention, en substitution partielle de Co et Mo, et comme ils sont peu coûteux et n'ont pas d'effets secondaires gênants dans les gammes précisées, ils sont tous deux (a fortiori en conjonction) un moyen économiquement très intéressant de parvenir au durcissement structural visé.

La teneur en C est comprise entre des traces et 0,03%. Dans les nuances selon l'invention où on a ajouté des éléments carburigènes, tels que Nb, des teneurs en carbone inférieures ou égales à 0.007% peuvent être préférées en l'absence d'ajout de chrome. On veut ainsi former de la martensite douce, car la martensite au carbone est fragile et ne permet pas la mise en forme nécessaire au produit. On veut aussi éviter la formation de gros carbures qui dégraderaient les propriétés mécaniques, puisque certains des éléments durcissants se substituant au Co tendent à favoriser la précipitation de carbures. Une teneur en C contrôlée dans les limites précisées est donc requise ou préférée.

La teneur en S est comprise entre des traces et 0,0020%, de préférence entre des traces et 0,0010%, pour ne pas former de sulfures qui dégraderaient la tenue en fatigue s'ils étaient présents en nombre et de grande taille. De plus, S fragilise les joints de grains en y ségrégeant, d'où la formation possible de criques lors des sollicitations de l'acier. Il faut donc éviter la présence de S dissous, grâce à une sélection soigneuse des matières premières et/ou une désulfuration profonde du métal liquide. La teneur maximale tolérable précise est à ajuster selon les applications visées, d'une façon connue (dans la limite de 0,0020% au plus, comme précisé plus haut).

La teneur en P est comprise entre des traces et 0,005%, de préférence moins, pour limiter la possibilité qu'il ségrège aux joints de grains, comme S.

B peut être présent à l'état de traces, mais un ajout volontaire peut aussi être préféré, jusqu'à 0,01%. Cet élément favorise l'affinement des structures et diminue la taille de grain. Il est bon pour les propriétés mécaniques, mais il ne faut pas en ajouter trop pour ne pas perdre en ductilité.

La teneur en H est limitée à 5 ppm pour éviter des problèmes de fragilisation par l'hydrogène. Le fait de réaliser un ou des traitements sous vide pendant l'élaboration du métal liquide et d'éviter les contaminations ultérieures du métal liquide par l'humidité ambiante, le laitier ou des matières ajoutées éventuelles permet généralement de ne pas dépasser ce niveau.

La teneur en O tolérable dépendrait, en toute rigueur, des applications envisagées pour le produit final, comme pour les teneurs tolérables en S, B, N et autres résiduels où éléments pouvant former des précipités. On fixe la teneur maximale à 0,030% (300 ppm), ce qui résulte de la mise en oeuvre des procédés habituellement employés lors de l'élaboration du métal liquide. On vise à ne pas avoir dans le produit final d'oxydes dont on ne pourrait pas maîtriser la composition, la répartition et la taille. A cet effet, un ajout d'AI ou d'un autre élément oxydable, dans les limites prescrites par ailleurs, aide à obtenir une teneur en O basse (par exemple 16 ppm ou plus bas) et à éviter la présence de gros oxydes à condition de bien contrôler la qualité de l'élaboration en évitant autant que possible les réoxydations du métal liquide par l'atmosphère et les réfractaires.

La teneur en Cr est comprise entre des traces et 5,0%, préférentiellement entre 0,01% et 5,0%, mieux entre 0,1% et 5,0%. Sa présence n'est donc pas absolument obligatoire, mais elle a l'avantage d'augmenter la résistance à l'oxydation et les propriétés mécaniques et d'aider à la nitruration. Le Cr en revanche, comme le Mn est un élément gammagène, qui étend le domaine de stabilité en température de l'austénite, en espaçant les points de transformation As/Af, Ms/Mf. La limite supérieure de 5% est justifiée par le souci de ne pas accentuer cet effet de manière drastique.

Le Cr a aussi une influence bénéfique sur les propriétés de la couche nitrurée qui a été éventuellement formée sur le produit réalisé à partir d'un acier selon l'invention : il diminue sa capacité à se fissurer. Cet effet est accru en présence d'une quantité significative de Mn.

De préférence, la somme Al + Cr est d'au moins 0,1%, mieux au moins 0,17%, pour que l'oxygène formant les oxydes puisse se répartir entre AI et Cr, et ainsi limite le risque de formation de grosses inclusions.

La teneur en Cu est comprise entre des traces et 4%. Il fait partie des éléments qu'on peut ajouter délibérément, et pas seulement subir en tant qu'impureté, pour compenser les basses teneurs en Co. L'ajout, s'il a lieu, doit être limité, car Cu est gammagène, et réduit le vieillissement martensitique. S'il est ajouté dans des proportions contrôlées, Cu participe au durcissement (conjointement au Mo) et améliore la résistance à l'oxydation.

La teneur en W est comprise entre des traces et 6,0%. Il n'est donc pas obligatoire et peut être ajouté principalement lorsqu'on désire imposer une teneur en Co, voire aussi en Mo, assez basse, comme on l'a vu plus haut, pour sa contribution au durcissement structural.

La teneur en Zr est comprise entre des traces et 4,0%. On peut désirer ajouter cet élément pour le faire contribuer à la désoxydation, et aussi à la formation de fins nitrures, afin que N ne forme pas de nitrures trop grossiers si des éléments susceptibles d'en produire (AI en particulier, puisque la présence massive de Ti est de toute façon à éviter) sont très significativement présents. Zr figure aussi parmi les éléments durcissants substituables à Mo et Co.

Ca et Mg peuvent être retrouvés dans le métal du fait de l'usure des réfractaires et produits d'aciérie, sous forme d'oxydes ou de sulfures. On peut également désirer ajouter volontairement ces éléments pour qu'ils contribuent à la désoxydation et au contrôle de la composition des inclusions oxydées qui va déterminer leur propension à former, en conjonction avec Al et Si notamment, des oxydes qui vont pouvoir coalescer et décanter plus facilement que les inclusions d'alumine pure, et rendre malléables lors des mises en forme les inclusions qui pourraient subsister, en diminuant leur nocivité. La teneur finale doit être limitée à 0,1% pour Ca et 0,8% pour Mg, afin d'éviter la formation d'oxydes dont on ne pourrait pas maîtriser la taille et la répartition.

Y, Nb, Ta, et V peuvent être ajoutés jusqu'à 4,0% chacun. Ils font partie des éléments durcissants qu'on peut utiliser pour compenser les basses teneurs en Co et Mo.

De plus, Ta et Y aident à former des oxydes de petite taille, et Nb et V sont favorables à la formation de petits carbures. Ces éléments sont donc favorables à l'atteinte des caractéristiques de l'invention concernant le contrôle de la taille des inclusions. Nb a aussi une influence bénéfique sur le retour élastique descouches nitrurées (sous faible charge).

Enfin, 0,14% ≤ Al + Si + Cu + Nb + Mn + V + Ta + Cr + W + C + B + Y + Zr + Ti + N ≤ 8,0%. En limitant la valeur de la somme de ces teneurs, on cherche à ne pas risquer d'exagérer les effets durcissants que la substitution de ces éléments à Co et Mo pourraient avoir, ainsi que leurs effets secondaires sur les autres propriétés de l'acier. La valeur minimale d'au moins 0,14% pour cette somme correspond à ce qui est nécessité lorsqu'on a une volonté délibérée de substituer au moins l'un de ces éléments durcissants à Co et Mo.

Il doit être compris que les teneurs que l'on qualifie de « préférentielles » pour certains éléments, ou pour les sommes des teneurs en certains éléments, sont indépendantes les unes des autres. On peut, sans sortir de l'invention, respecter une ou plusieurs desdites conditions préférentielles et ne pas respecter les autres.

Parmi ces conditions préférentielles, la plus conseillée est celle portant sur la somme Al + Cr ≥ 0,17%.

Respecter au moins l'une des conditions portant sur la somme Al + Cr ≥ 0,17% ou Si + Mn ≥ 0,13% s'avère particulièrement avantageux pour optimiser les résultats recherchés, en termes de contrôle des inclusions, de propriétés mécaniques, et aussi pour l'aptitude à la nitruration associée à un bon comportement de la couche nitrurée lors des utilisations du produit final.

Les éléments non cités ne sont, au plus, présents qu'à l'état d'impuretés résultant de l'élaboration et ne sont pas ajoutés volontairement.

Concernant la population inclusionnaire, le critère à respecter, selon l'invention, est que cette population inclusionnaire, observée par analyse d'image sur une surface polie de 650 mm² si l'acier est sous forme d'une pièce ou d'une tôle transformée à chaud, et de 800 mm² si l'acier est sous forme d'une tôle laminée à froid, ne comporte pas d'inclusions non-métalliques de diamètre équivalent supérieur à 10 µm, de préférence pas d'inclusions de taille supérieure à 8 µm.

Dans le cas d'une pièce ou tôle transformée à chaud, elle ne comporte optimalement pas plus de deux, et de préférence pas plus de 1,5 inclusions non-métalliques de diamètre équivalent supérieur à 1,5 µm par mm² sur tôle transformée à chaud, l'observation étant réalisée par analyse d'image MEB couvrant au moins 200 mm², réalisée par exemple sur une surface polie de 650 mm².

Les inclusions non-métalliques considérées sont les oxydes, les sulfures et les nitrures. La population d'oxydes est maîtrisée principalement par le choix des méthodes d'élaboration (désoxydation poussée du métal liquide, après laquelle on prend soin d'éliminer le mieux possible les grosses inclusions, notamment par l'utilisation de procédés de refusion de l'électrode initialement coulée à partir du métal liquide). La population de sulfures est maîtrisée par l'imposition de teneurs en S très faibles, nécessitant un choix soigneux des matières premières et/ou une désulfuration du métal liquide. La population de nitrures est maîtrisée par l'imposition de teneurs en N basses ou très basses, grâce par exemple à l'utilisation de pressions réduites lors de l'élaboration du métal liquide et de la refusion de l'électrode, et à la limitation de la teneur en Ti du métal.

Les aciers selon l'invention sont préparés, par exemple et de façon non limitative, par les voies suivantes.

L'acier, d'abord élaboré à l'état liquide dans un four à arc, et éventuellement aussi dans une poche, pour régler sa composition sur les éléments essentiels, est ensuite coulé sous forme d'électrodes de refusion. Ces électrodes sont :
- soit refondues une fois sous vide (Procédé VIM : Vacuum Induction Melting procédé VAR, Vacuum Arc Remelting connu en lui-même), ou sous laitier électroconducteur (procédé ESR, Electro Slag Remelting, connu en lui-même), pour former, après coulée et solidification de l'acier liquide, des lingots, des billettes ou des brames ;
- soit refondues plusieurs fois, sous vide (VAR) ou sous laitier électroconducteur (ESR) pour former, après la coulée et la solidification, des lingots ou des brames.

On réalise ainsi, après l'élaboration et la coulée sous forme d'électrode, soit une simple refusion de l'électrode, soit une refusion multiple de l'électrode, par exemple VAR + VAR ou ESR + VAR. Ces refusions permettent d'épurer le métal et d'améliorer la qualité de la solidification en réduisant les ségrégations et en affinant sa structure de solidification. En particulier, la refusion ESR permet d'abaisser efficacement la teneur en soufre, et la refusion VAR permet d'abaisser efficacement les teneurs en azote.

Les lingots ou brames sont alors laminés à chaud, après un réchauffage entre 1050 et 1300°C, typiquement aux environs de 1200°C, pour obtenir des tôles ou des bandes laminées à chaud de quelques millimètres d'épaisseur, par exemple d'environ 1,5 à 5 mm d'épaisseur. Pour les nuances contenant des éléments gammagènes à des teneurs supérieures à 10% par exemple, il peut parfois être judicieux de contrôler le refroidissement des tôles, pour favoriser la formation de martensite et éviter de laisser subsister une quantité d'austénite qui pourrait s'avérer trop élevée. C'est notamment le cas pour les aciers contenant du Mn. L'expérience pourra démontrer à l'homme du métier si, dans le cas précis de l'acier qu'il désire obtenir avec les outils dont il dispose, un tel contrôle du refroidissement pourra être utile.

Les produits laminés à chaud ayant cette épaisseur peuvent, dans certains cas, être utilisés soit à l'état brut de laminage à chaud, soit être mis en forme à chaud, soit être utilisés dans un état à recristallisation contrôlée. Une recristallisation peut éventuellement déjà se produire de façon suffisante à l'issue du laminage à chaud et du séjour de la bande sous forme de bobines qui constitue alors un véritable traitement thermique, mais au cas où elle serait insuffisante pour obtenir la microstructure et/ou les propriétés mécaniques souhaitées, un recuit de recristallisation peut être effectué ensuite pour ajuster cette structure. Dans ce dernier cas, l'homme du métier sait comment régler les paramètres du recuit de recristallisation (température, durée...) pour ajuster la microstructure (notamment la taille de grain) et les propriétés mécaniques souhaitées.

On vise, typiquement, après laminage à chaud et recristallisation éventuelle (voire d'autres types de traitements thermiques), des duretés Vickers supérieures ou égales à 285 Hv10. Cela suggère une résistance à la traction supérieure ou égale à 950 MPa, et un allongement réparti supérieur ou égal à 5%.

La dureté est évaluée en section de tôle à chaud. Les structures visées sur produit laminé à chaud décapé sont fines, présentant préférentiellement un indice de taille de grain austénitique supérieure ou égale à 10 selon la norme ASTM E112, pour laquelle on rappelle que le chiffre donnant la taille de grain est d'autant plus élevé que le grain est fin.

Ces bandes laminées à chaud, et éventuellement traitées thermiquement, peuvent aussi ne pas être destinées à être utilisées directement, et il est alors nécessaire de diminuer leur épaisseur par une mise en forme à froid pour les applications envisagées. Dans ce cas, elles sont décapées, puis laminées à froid, avec un ou plusieurs recuits intermédiaires entre les différentes passes du laminage à froid, et éventuellement un (ou des) recuit(s) final (finaux) de vieillissement, de recristallisation, ou d'autres types de traitements thermiques, ou des traitements de surface appropriés selon l'application visée (qui seront détaillés ensuite), pour obtenir des bandes laminées à froid d'épaisseur inférieure à 2 mm, de préférence inférieure ou égale à 1 mm, et par exemple de 0,4 mm ou de 0,2 mm d'épaisseur.

Le traitement de recristallisation de la bande laminée à froid est de préférence effectué à une épaisseur telle que la bande laminée à froid a, à ce moment, un taux d'écrouissage supérieur à 30%, mieux, supérieur à 40%. Il procure à la bande une taille de grain qui est, de préférence, de ASTM 10 (diamètre moyen des grains de moins de 10 µm) ou plus fin (selon la norme ASTM E112).

Le traitement de recuit destiné à obtenir un grain fin, et/ou un relâchement des contraintes et/ou une normalisation du métal, est réalisé sous atmosphère protectrice en ajustant convenablement les paramètres de température et de durée. Ces paramètres dépendent des conditions particulières de réalisation du traitement thermique, et l'homme du métier sait déterminer ces paramètres dans chaque cas particulier.

Les exigences préférentielles sur la taille des grains des produits laminés à froid, éventuellement traités thermiquement, sont d'ailleurs aussi, préférentiellement, valables sur les produits destinés à être utilisés à l'état laminé à chaud, éventuellement après avoir été traités thermiquement.

Afin d'améliorer la planéité de la bande, et, si nécessaire, de parfaire la transformation martensitique, la bande peut en outre être soumise à un laminage à froid final léger (skin-pass ou planage) avec un taux de réduction compris entre 1 et 20%.

Typiquement, les traitements de durcissement (vieillissement) de la bande laminée à froid sont de préférence effectués à une épaisseur telle que la bande laminée a, à ce moment, un taux d'écrouissage supérieur à 30%, mieux, supérieur à 40%.

On peut alors découper dans la bande une pièce, et mettre en forme cette pièce, par exemple par pliage, soudage..., puis effectuer sur celle-ci un traitement de durcissement, consistant en un maintien entre 400 et 600°C pendant 30 min à 5 h. (de préférence à 420-550°C pendant 30 min à 2 h, par exemple 420°C pendant 30 min ou 480°C pendant 2 h)

Les produits laminés à chaud sont également susceptibles de subir un traitement de durcissement, typique des aciers maraging, avec les bénéfices classiquement attendus d'un tel traitement sur leurs propriétés mécaniques.

Les produits issus de nuances martensitiques à au moins 70%, laminés à froid, et éventuellement traités thermiquement, selon l'invention peuvent permettre d'atteindre une résistance à la traction Rm d'au moins 2030 MPa, une limite élastique conventionnelle Rp_{0,2} d'au moins 2000 MPa, et un allongement A_{(5,65)} d'au moins 1%. Les produits issus de nuances biphasées ferrito-austénitiques, en revanche, présentent des propriétés mécaniques moindres à l'issue de certains cycles thermiques mais conservent des performances accrues lors de sollicitations dynamiques en service (écrouissage, transformation de phase et nitruration renforcées).

Ces caractéristiques peuvent d'ailleurs aussi, optimalement, être atteintes sur des produits laminés à chaud traités thermiquement de façon adéquate.

Les produits peuvent ensuite être durcis en surface (par nitruration, cémentation, carbonitruration, grenaillage...) afin d'accroître leurs performances en fatigue. La dureté en extrême surface Hv0,1 peut être typiquement d'au moins 950 sans que des procédés et des conditions de nitruration autres que des procédés et conditions opératoires connus de l'homme de métier soient nécessaires.

Des expériences ont été menées sur des échantillons d'un acier (notés Inv) et sur des échantillons de référence (notés Réf), dont les compositions sont résumées dans le tableau 1, exprimées en % pondéraux. Le reste est du fer, et aussi des impuretés résultant de l'élaboration et qui sont à un niveau sans importance pour les propriétés considérées. Le signe « - » signifie que l'élément n'est présent dans l'échantillon qu'au plus à l'état de traces ou de très faibles quantités, sans effets métallurgiques.

| | Ni | Co | Mo | Ti | Al | Cr | V | Ta | Cu | Nb | Mn | W | Si | Ni+Co+Mo |
|---|---|---|---|---|---|---|---|---|---|---|---|---|---|---|
| Ref 1 | 18,11 | 16,50 | 5,30 | - | 0,02 | 0,081 | - | - | 0,110 | - | 0,074 | - | 0,047 | 39,91 |
| Ref 2 | 17,70 | 9,10 | 4,99 | 0,457 | 0,11 | - | - | - | - | - | - | - | 0,008 | 31,79 |
| Inv 1 | 17,70 | 12,98 | 4,95 | - | - | 0,021 | 0,44 | - | - | - | 0,291 | - | < 0,010 | 35,63 |
| Inv 2 | 17,90 | 12,60 | 4,98 | - | - | 0,082 | 2,02 | - | - | - | 0,273 | - | 0,021 | 35,48 |
| Inv 3 | 18,20 | 12,20 | 5,02 | - | - | 0,157 | 3,95 | - | - | - | 0,250 | - | 0,042 | 35,42 |
| Inv 4 | 18,30 | 12,20 | 7,10 | - | - | 0,159 | 3,99 | - | - | - | 0,240 | - | 0,034 | 37,60 |
| Inv 5 | 17,90 | 13,20 | 5,00 | - | - | - | - | 0,12 | - | - | 0,217 | - | < 0,010 | 36,10 |
| Inv 6 | 17,90 | 13,00 | 5,00 | - | - | 0,005 | - | 0,53 | - | - | 0,218 | - | < 0,010 | 35,90 |
| Inv 7 | 18,20 | 12,60 | 4,80 | - | - | 0,006 | - | 2,84 | - | - | 0,213 | - | 0,014 | 35,60 |
| Inv 8 | 18,40 | 12,70 | 4,90 | - | 0,80 | 0,197 | - | 2,95 | - | - | 0,216 | - | 0,014 | 36,00 |
| Inv 9 | 17,70 | 13,10 | 5,00 | 0,015 | - | 0,005 | - | 0,009 | 0,190 | - | 0,288 | - | 0,020 | 35,80 |
| Inv 10 | 17,80 | 13,10 | 5,00 | 0,016 | - | 0,005 | - | 0,009 | 0,800 | - | 0,278 | - | 0,016 | 35,90 |
| Inv 11 | 17,70 | 13,00 | 5,00 | 0,016 | - | 0,005 | - | 0,009 | 2,060 | - | 0,274 | - | 0,020 | 35,70 |
| Inv 12 | 17,90 | 13,10 | 7,00 | 0,020 | - | 0,010 | - | 0,004 | 4,060 | - | 0,263 | - | 0,013 | 38,00 |
| Inv 13 | 18,10 | 13,01 | 5,32 | - | 0,02 | 0,908 | - | - | 2,010 | - | 0,167 | - | 0,033 | 36,43 |
| Inv 14 | 17,73 | 13,00 | 4,95 | 0,015 | - | 0,006 | - | 0,008 | - | 0,21 | 0,291 | - | 0,012 | 35,68 |
| Inv 15 | 17,77 | 12,90 | 4,95 | 0,016 | - | 0,006 | - | 0,013 | - | 0,82 | 0,278 | - | 0,010 | 35,62 |
| Inv 16 | 18,06 | 12,80 | 4,97 | 0,016 | - | 0,007 | - | 0,023 | - | 1,87 | 0,270 | - | 0,014 | 35,83 |
| Inv 17 | 18,50 | 12,60 | 6,46 | 0,019 | 0,01 | 0,100 | - | 0,043 | - | 3,77 | 0,259 | - | 0,024 | 37,56 |
| Inv 18 | 18,20 | 12,86 | 5,31 | - | 0,02 | 0,037 | - | - | 0,094 | 0,793 | 0,174 | - | 0,038 | 36,37 |
| Inv 19 | 18,22 | 12,89 | 5,26 | - | 0,01 | 0,883 | - | - | 0,084 | 0,775 | 0,144 | - | 0,033 | 36,37 |
| Inv 20 | 17,69 | 13,00 | 4,96 | 0,016 | - | 0,006 | - | - | - | - | 0,780 | - | 0,010 | 35,65 |
| Inv 21 | 17,73 | 13,00 | 4,96 | 0,015 | - | 0,007 | - | - | - | - | 1,970 | - | < 0,010 | 35,69 |
| Inv 22 | 17,87 | 13,00 | 4,95 | 0,015 | - | 0,010 | - | - | - | - | 3,920 | - | < 0,010 | 35,82 |
| Ref 23 | 17,94 | 12,80 | 4,84 | 0,015 | 0,01 | 0,012 | - | - | - | - | 7,830 | - | 0,014 | 35,58 |
| Inv 24 | 18,19 | 13,00 | 5,31 | - | 0,01 | 0,902 | - | - | 0,095 | - | 1,930 | - | 0,309 | 36,50 |
| Réf 25 | 10,10 | 2,26 | 1,98 | - | 0,54 | 0,007 | - | - | - | - | 13,54 | - | 0,044 | 14,34 |
| Réf 26 | 18,24 | 5,02 | 4,99 | 0,007 | 0,62 | 0,011 | - | - | - | - | 13,57 | - | 0,047 | 28,25 |
| Inv 27 | 17,80 | 5,20 | 4,90 | 0,006 | 0,25 | 0,005 | - | - | - | - | 0,0053 | 0,20 | 0,036 | 27,99 |
| Inv 28 | 17,90 | 5,20 | 4,90 | 0,006 | 0,24 | 0,005 | - | - | - | - | 0,0065 | 0,80 | 0,034 | 28,01 |
| Inv 29 | 18,00 | 5,10 | 4,80 | 0,006 | 0,25 | 0,005 | - | - | - | - | - | 1,90 | 0,036 | 27,90 |
| Inv 30 | 18,00 | 4,80 | 4,50 | 0,006 | 0,24 | 0,005 | - | - | - | - | - | 3,70 | 0,025 | 27,23 |
| Inv 31 | 17,90 | 7,20 | 5,00 | 0,006 | 0,24 | 0,007 | - | - | - | - | 0,0058 | 0,20 | 0,029 | 29,99 |
| Inv 32 | 17,90 | 7,10 | 4,90 | 0,006 | 0,24 | 0,007 | - | - | - | - | 0,0051 | 0,70 | 0,032 | 29,90 |
| Inv 33 | 18,10 | 7,00 | 4,80 | 0,006 | 0,24 | 0,007 | - | - | - | - | 0,0055 | 2,10 | 0,031 | 29,90 |
| Inv 34 | 19,40 | 6,80 | 4,70 | 0,006 | 0,24 | 0,006 | - | - | - | - | - | 4,20 | 0,028 | 30,90 |
| Inv 35 | 17,88 | 10,11 | 4,94 | 0,007 | 0,24 | 0,006 | - | - | - | - | - | 0,20 | 0,038 | 32,93 |
| Inv 36 | 17,88 | 10,01 | 4,91 | 0,007 | 0,24 | 0,005 | - | - | - | - | - | 0,82 | 0,030 | 32,80 |
| Inv 37 | 18,08 | 9,82 | 4,81 | 0,006 | 0,24 | 0,006 | - | - | - | - | - | 1,96 | 0,033 | 32,71 |
| Inv 38 | 19,42 | 9,57 | 4,70 | 0,006 | 0,25 | 0,006 | - | - | - | - | - | 3,94 | 0,033 | 33,69 |
| Inv 39 | 17,90 | 5,11 | 4,93 | - | 0,20 | - | - | - | - | - | 0,037 | - | < 0,010 | 27,94 |
| Inv 40 | 17,98 | 2,09 | 4,97 | - | 0,57 | - | - | - | - | - | - | - | < 0,010 | 25,04 |
| Inv 41 | 18,01 | 2,11 | 4,97 | - | 0,88 | - | - | - | - | - | - | - | < 0,010 | 25,09 |
| Inv 42 | 17,95 | 2,11 | 4,96 | - | 0,51 | 0,201 | - | - | - | - | - | - | < 0,010 | 25,02 |
| Inv 43 | 17,92 | 2,10 | 4,97 | - | 0,52 | 0,474 | - | - | - | - | - | - | 0,016 | 24,99 |
| Inv 44 | 17,90 | 5,30 | 5,00 | 0,006 | 0,66 | 0,200 | - | - | - | - | 0,0069 | - | 0,025 | 28,17 |
| Inv 45 | 17,90 | 5,20 | 4,99 | 0,006 | 0,85 | 0,200 | - | - | - | - | 0,0067 | - | 0,027 | 28,12 |
| Inv 46 | 17,90 | 7,20 | 4,99 | 0,006 | 0,85 | 0,200 | - | - | - | - | 0,0055 | - | 0,030 | 30,09 |
| Inv 47 | 18,00 | 10,20 | 5,00 | - | 0,86 | 0,200 | - | - | - | - | 0,0052 | - | 0,028 | 33,20 |
| Inv 48 | 17,95 | 5,24 | 5,00 | 0,109 | 0,86 | 0,006 | - | - | - | - | 0,0107 | - | 0,123 | 28,19 |
| Inv 49 | 17,97 | 7,20 | 5,00 | 0,109 | 0,85 | 0,007 | - | - | - | - | 0,0119 | - | 0,120 | 30,17 |
| Ref 50 | 17,89 | 5,26 | 4,99 | 0,006 | 0,85 | 0,005 | - | - | - | - | 0,0068 | - | 0,124 | 28,14 |
| Ref 51 | 17,87 | 7,24 | 5,03 | 0,007 | 0,84 | 0,006 | - | - | - | - | 0,0066 | - | 0,127 | 30,14 |
| Réf 3 | 18,04 | 9,96 | 4,87 | - | 4,48 | 0,005 | - | - | - | - | 0,063 | - | 0,027 | 32,87 |
| Réf 4 | 18,04 | 16,21 | 4,89 | - | - | - | - | - | - | - | - | - | 0,021 | 39,14 |
| Réf 5 | 18,04 | 18,57 | 4,74 | - | - | - | - | - | - | - | - | - | 0,035 | 41,35 |
| Inv 52 | 17,96 | 5,12 | 4,97 | 0,01 | 0,80 | 0,005 | - | - | - | | 0,008 | - | 0,124 | 28,05 |
| Inv 53 | 18,05 | 7,18 | 4,86 | 0,008 | 0,82 | 0,006 | - | - | - | - | 0,009 | - | 0,127 | 30,09 |
| Inv 54 | 17,96 | 16,07 | 9,89 | - | 0,01 | 0,02 | - | - | - | - | 0,11 | - | 0,09 | 43,92 |
| Inv 55 | 18,05 | 16,30 | 11,83 | - | 0,02 | 0,01 | - | - | - | - | 0,10 | - | 0,08 | 46,18 |
| Inv 56 | 18,04 | 8,14 | 5,06 | - | 2,63 | 0,005 | - | - | - | - | 0,006 | - | 0,029 | 31,24 |
| Inv 57 | 18,16 | 9,98 | 5,06 | - | 3,63 | 2,2 | - | - | - | - | - | - | 0,008 | 33,20 |
| Ref 58 | 18,24 | 10,14 | 5,06 | - | 4,63 | 4,6 | - | - | - | - | - | - | 0,007 | 33,44 |
| Inv 59 | 18,04 | 8,14 | 5,06 | - | 2,63 | 0,005 | - | - | - | - | 0,006 | - | 1,97 | 31,24 |
| Inv 60 | 18,04 | 16,03 | 4,70 | - | 0,01 | 0,005 | - | - | - | - | - | - | 0,03 | 38,77 |
| Réf 6 | 18,04 | 8,14 | 5,06 | - | 2,48 | - | - | - | - | - | - | - | 2,04 | 31,24 |
| Inv 61 | 18,16 | 9,98 | 5,06 | - | 3,48 | 0,04 | - | - | - | - | - | - | 0,21 | 33,20 |

**Tableau 1 : Compositions des échantillons testés**

| | S | Mg | Zr | Y | B | C | N | P | H | O | Ca |
|---|---|---|---|---|---|---|---|---|---|---|---|
| Ref 1 | 0,0003 | - | - | - | - | 0,003 | 0,0015 | 0,003 | < 0,00002 | < 0,0005 | < 0,0005 |
| Ref 2 | < 0,0005 | - | - | - | - | 0,002 | 0,0007 | < 0,002 | < 0,00002 | 0,0020 | < 0,0005 |
| Inv 1 | < 0,0005 | - | - | - | 0,0004 | 0,002 | 0,0009 | < 0,003 | < 0,00002 | 0,0036 | < 0,0005 |
| Inv 2 | < 0,0005 | - | - | - | 0,0004 | 0,002 | 0,0043 | < 0,003 | < 0,00002 | 0,0088 | < 0,0005 |
| Inv 3 | 0,0008 | - | - | - | 0,0005 | 0,002 | 0,0068 | < 0,003 | < 0,00004 | 0,0073 | < 0,0005 |
| Inv 4 | 0,0007 | - | - | - | 0,0007 | 0,002 | 0,0057 | < 0,003 | < 0,00002 | 0,0073 | < 0,0005 |
| Inv 5 | < 0,0005 | - | - | - | - | < 0,001 | 0,0016 | < 0,003 | < 0,00002 | 0,0276 | < 0,0005 |
| Inv 6 | < 0,0005 | - | - | - | - | < 0,001 | 0,0017 | < 0,003 | < 0,00002 | 0,0028 | < 0,0005 |
| Inv 7 | < 0,0005 | - | - | - | - | < 0,001 | 0,0015 | < 0,003 | < 0,00002 | 0,0023 | < 0,0005 |
| Inv 8 | < 0,0005 | - | - | - | 0,0005 | 0,001 | 0,0017 | < 0,003 | < 0,00002 | 0,0012 | < 0,0005 |
| Inv 9 | < 0,0005 | - | - | - | - | 0,005 | 0,0008 | < 0,003 | 0,00003 | 0,0073 | < 0,0005 |
| Inv 10 | < 0,0005 | - | - | - | 0,0003 | 0,002 | 0,0009 | < 0,003 | < 0,00002 | 0,006 | < 0,0005 |
| Inv 11 | < 0,0005 | - | - | - | 0,0004 | 0,001 | 0,0007 | < 0,003 | < 0,00002 | 0,0062 | < 0,0005 |
| Inv 12 | < 0,0005 | - | - | - | 0,0008 | 0,002 | 0,0006 | < 0,003 | < 0,00002 | 0,014 | < 0,0005 |
| Inv 13 | 0,00035 | - | - | - | - | 0,006 | 0,0016 | 0,002 | < 0,00002 | < 0,0005 | < 0,0005 |
| Inv 14 | < 0,0005 | - | - | - | - | 0,001 | 0,0005 | < 0,003 | 0,00007 | 0,0103 | < 0,0005 |
| Inv 15 | < 0,0005 | - | - | - | - | 0,002 | 0,0015 | < 0,003 | < 0,00002 | 0,0046 | < 0,0005 |
| Inv 16 | < 0,0005 | - | - | - | 0,0003 | 0,001 | 0,0046 | < 0,003 | < 0,00002 | 0,0042 | < 0,0005 |
| Inv 17 | < 0,0005 | - | - | - | 0,0006 | < 0,001 | 0,0095 | < 0,003 | < 0,00002 | 0,0044 | < 0,0005 |
| Inv 18 | 0,0005 | - | - | - | - | 0,008 | 0,0012 | < 0,002 | < 0,00002 | < 0,0005 | < 0,0005 |
| Inv 19 | 0,00044 | - | - | - | 0,0003 | 0,007 | 0,0014 | 0,002 | < 0,00002 | 0,0014 | < 0,0005 |
| Inv 20 | < 0,0005 | - | - | - | 0,0003 | 0,006 | 0,0007 | < 0,003 | < 0,00002 | 0,0081 | < 0,0005 |
| Inv 21 | 0,0007 | - | - | - | 0,0003 | 0,006 | 0,001 | < 0,003 | < 0,00002 | 0,0048 | < 0,0005 |
| Inv 22 | 0,0012 | - | - | - | 0,0004 | 0,004 | 0,0015 | < 0,003 | 0,00004 | 0,0037 | < 0,0005 |
| Ref 23 | 0,0024 | - | - | - | 0,0005 | 0,004 | 0,0027 | < 0,003 | < 0,00002 | 0,0028 | < 0,0005 |
| Inv 24 | 0,001 | - | - | - | - | 0,005 | 0,0013 | 0,002 | < 0,00002 | < 0,0005 | < 0,0005 |
| Ref 25 | < 0,0005 | - | - | - | - | 0,003 | 0,0057 | < 0,003 | < 0,00002 | 0,0008 | < 0,0005 |
| Ref 26 | < 0,0005 | - | - | - | - | 0,004 | 0,0065 | < 0,003 | < 0,00002 | < 0,0005 | < 0,0005 |
| Inv 27 | < 0,0005 | - | - | - | - | < 0,001 | 0,0006 | < 0,003 | < 0,00002 | 0,0088 | < 0,0005 |
| Inv 28 | < 0,0005 | - | - | - | - | 0,001 | 0,0008 | < 0,003 | < 0,00002 | 0,0088 | < 0,0005 |
| Inv 29 | < 0,0005 | - | - | - | - | 0,001 | 0,0011 | < 0,003 | < 0,00002 | 0,0113 | < 0,0005 |
| Inv 30 | < 0,0005 | - | - | - | - | < 0,001 | 0,0015 | < 0,003 | < 0,00002 | 0,0111 | < 0,0005 |
| Inv 31 | < 0,0005 | - | - | - | - | 0,001 | 0,0008 | < 0,003 | < 0,00002 | 0,0056 | < 0,0005 |
| Inv 32 | < 0,0005 | - | - | - | - | 0,002 | 0,0012 | < 0,003 | < 0,00002 | 0,0069 | < 0,0005 |
| Inv 33 | < 0,0005 | - | - | - | - | 0,001 | 0,0017 | < 0,003 | < 0,00002 | 0,0078 | < 0,0005 |
| Inv 34 | < 0,0005 | - | - | - | - | 0,003 | 0,0025 | < 0,003 | < 0,00002 | 0,0113 | < 0,0005 |
| Inv 35 | < 0,0005 | - | - | - | - | 0,003 | 0,0007 | < 0,003 | < 0,00002 | 0,0037 | < 0,0005 |
| Inv 36 | < 0,0005 | - | - | - | - | 0,002 | 0,001 | < 0,003 | < 0,00002 | 0,0045 | < 0,0005 |
| Inv 37 | < 0,0005 | - | - | - | - | 0,002 | 0,0019 | < 0,003 | < 0,00002 | 0,0052 | < 0,0005 |
| Inv 38 | < 0,0005 | - | - | - | - | 0,001 | 0,0023 | < 0,003 | < 0,00002 | 0,0064 | < 0,0005 |
| Inv 39 | < 0,005 | - | - | - | - | 0,006 | < 0,0005 | < 0,002 | < 0,00002 | 0,0014 | < 0,0005 |
| Inv 40 | < 0,005 | - | - | - | - | 0,003 | < 0,0005 | < 0,002 | < 0,00002 | 0,003 | < 0,0005 |
| Inv 41 | < 0,005 | - | - | - | - | 0,003 | < 0,0005 | < 0,002 | < 0,00002 | 0,0017 | < 0,0005 |
| Inv 42 | < 0,005 | - | - | - | - | 0,002 | < 0,0005 | < 0,002 | < 0,00002 | 0,0008 | < 0,0005 |
| Inv 43 | < 0,005 | - | - | - | - | 0,002 | < 0,0005 | < 0,002 | < 0,00002 | 0,0011 | < 0,0005 |
| Inv 44 | < 0,0005 | - | - | - | - | 0,002 | 0,0006 | < 0,003 | < 0,00002 | 0,0016 | < 0,0005 |
| Inv 45 | < 0,0005 | - | - | - | - | 0,002 | 0,0005 | < 0,003 | < 0,00002 | 0,0024 | < 0,0005 |
| Inv 46 | < 0,0005 | - | - | - | - | 0,003 | 0,0005 | < 0,003 | < 0,00002 | 0,0007 | < 0,0005 |
| Inv 47 | < 0,0005 | - | - | - | - | 0,002 | 0,0006 | < 0,003 | < 0,00002 | < 0,0005 | < 0,0005 |
| Inv 48 | < 0,0005 | - | - | - | - | 0,003 | 0,0013 | < 0,003 | < 0,00002 | 0,0020 | < 0,0005 |
| Inv 49 | < 0,0005 | - | - | - | - | 0,003 | 0,0013 | < 0,003 | < 0,00002 | 0,0017 | < 0,0005 |
| Ref 50 | 0,004 | - | - | - | - | 0,003 | < 0,0005 | < 0,003 | < 0,00002 | 0,0005 | < 0,0005 |
| Ref 51 | 0,0053 | - | - | - | - | 0,003 | 0,0006 | < 0,003 | < 0,00002 | < 0,0005 | < 0,0005 |
| Réf 3 | < 0,0005 | - | - | - | - | 0,002 | 0,0060 | < 0,003 | < 0,00002 | 0,0054 | < 0,0005 |
| Réf 4 | 0,0027 | - | - | - | - | 0,0035 | < 0,0005 | < 0,003 | < 0,00002 | 0,0020 | < 0,0005 |
| Réf 5 | 0,0035 | - | - | - | - | 0,002 | < 0,0005 | < 0,003 | < 0,00002 | 0,0014 | < 0,0005 |
| Inv 52 | 0,0009 | 0,03 | - | - | - | 0,003 | < 0,0005 | < 0,003 | < 0,00002 | 0,0005 | < 0,0005 |
| Inv 53 | 0,0009 | 0,05 | - | - | - | 0,003 | < 0,0005 | < 0,003 | < 0,00002 | < 0,0005 | < 0,0005 |
| Inv 54 | < 0,0005 | - | - | - | - | 0,006 | < 0,0005 | < 0,003 | < 0,00002 | 0,0011 | < 0,0005 |
| Inv 55 | < 0,0005 | - | - | - | - | 0,007 | < 0,0005 | < 0,003 | < 0,00002 | 0,0032 | < 0,0005 |
| Inv 56 | < 0,0005 | - | 0,02 | - | - | 0,002 | < 0,0005 | < 0,003 | < 0,00002 | 0,008 | < 0,0005 |
| Inv 57 | < 0,0005 | - | 0,015 | - | - | 0,004 | 0,0020 | < 0,003 | < 0,00002 | 0,002 | < 0,0005 |
| Ref 58 | < 0,0005 | - | 0,13 | - | - | 0,006 | 0,0015 | < 0,003 | < 0,00002 | 0,0015 | < 0,0005 |
| Inv 59 | < 0,0005 | - | - | 0,96 | - | 0,006 | < 0,0005 | < 0,003 | < 0,00002 | 0,003 | < 0,0005 |
| Inv 60 | < 0,0005 | - | - | - | - | 0,002 | < 0,0005 | < 0,003 | < 0,00002 | 0,0018 | 0,098 |
| Inv 61 | < 0,0005 | 0,782 | 0,03 | - | - | 0,002 | < 0,0005 | < 0,003 | < 0,00002 | 0,003 | < 0,0005 |
| Réf 6 | < 0,0005 | - | - | 3,46 | - | 0,005 | < 0,0005 | < 0,003 | < 0,00002 | 0,002 | < 0,0005 |

Dans le tableau ci-dessus, hormis les aciers Inv 27 à Inv 47 et Inv 54 à Inv 61, les aciers notés Inv présentent des compositions conformes à l'invention revendiquée.

Les élaborations des aciers notés Inv et des aciers de référence, sur lesquels ont été prélevés les échantillons du tableau 1, ont été réalisées selon le schéma suivant, de façon à obtenir des bandes d'épaisseur 0,4 mm.

Les échantillons notés Inv ont été élaborés en laboratoire dans un four à induction sous vide de recherche, sous forme de coulées d'essais de quelques kg (5 à 50kg), excepté les échantillons Inv 13, Inv 18, Inv 19 Inv 24, Inv 54, Inv 55, Inv 60 et Inv 61 qui ont été élaborés sur outils industriels (quelques tonnes), tout d'abord par fusion dans un four à arc, puis application des procédés VIM et refusion VAR.

Les échantillons Réf 1, Réf 2 et Ref 4 ont été élaborés sur outils industriels. Les autres échantillons de référence Ref 3, Ref 5, Ref 6, Ref 23, Ref 25, Ref 26, Ref 50, Ref 51, Ref 58 ont été élaborés en laboratoire dans les mêmes conditions que les échantillons notés Inv élaborés en laboratoire.

Les structures et populations inclusionnaires évaluées sur les coulées de laboratoire sont très proches de celles obtenues sur outils industriels de par les durées d'élaboration similaires mises en oeuvre. L'écart sur les densités et les tailles des inclusions les plus fines ne dépasse pas 20% en faveur des coulées de laboratoire (au regard des formats de lingots mis en oeuvre), toutes choses étant égales par ailleurs. Cependant les coulées d'études se caractérisent par l'absence de refusion, ce qui va dans le sens d'une compensation des écarts sur les précédents paramètres et rend les résultats d'essais de laboratoire raisonnablement comparables aux résultats d'essais industriels. Puis les lingots ont été transformés en brames, par blooming avec une réduction d'épaisseur portant cette épaisseur à entre 200 et 100 mm.

Puis les brames ont été laminées à chaud jusqu'à l'épaisseur 3,5 mm, après un réchauffage à environ 1300°C qui a conduit à ce que le laminage à chaud ait lieu à partir d'une température de 1285°C, compte tenu du temps de transfert entre le four et la cage de laminage. Le métal a ensuite été décapé, et a été laminé à froid jusqu'à une épaisseur de 0,4 mm ou moins. Des recuits d'austénitisation ou de mise en solution, puis de recristallisation, puis de vieillissement, ont été effectués, le cas échéant, à différentes étapes de la fabrication, et ont été réalisés respectivement entre 800 et 850°C (pendant au plus 1h), puis entre 850°C et 1200°C (pour des durées inférieures à 10 min) et enfin entre 420 et 550°C pendant 30 min à 4 h.

Le tableau 2 présente :
- la taille des plus grosses inclusions de chaque échantillon du tableau 1, à l'issue du laminage à chaud, observées sur 650 mm² de ces échantillons, prélevés à milargeur de la tôle ;
- les densités inclusionnaires évaluées sur une surface de 650 mm² en microscopie optique (MO), pour les inclusions de plus de 4 µm ;
- et les densités inclusionnaires observées en microscopie électronique à balayage (MEB) par analyse d'image automatisée pour les échantillons élaborés industriellement, observées sur des surfaces de 100 à 400 mm², pour les inclusions de plus de 1,5 µm.

Les dimensions maximales des particules observées ont été transcrites en diamètre d'inclusion équivalent noté « D circle ». Il doit être entendu que par « diamètre » des inclusions, on veut dire « diamètre équivalent », c'est-à-dire celui d'une inclusion qui serait de section circulaire et aurait la même surface que l'inclusion observée, si celle-ci a une section plus complexe que celle d'un simple cercle.

De plus l'analyse d'images optique ne distinguant que des contrastes colorés et ne différenciant pas la composition des inclusions, seule l'absence de TiN (de contraste coloré orange, selon l'expérience de l'homme du métier ) a pu être vérifiée en microscopie optique, ainsi que les densités inclusionnaires des diverses autres particules évaluées pour les inclusions de tailles supérieures à 4µm. Enfin, les populations inclusionnaires ont été plus précisément caractérisées par comptage et analyse automatisés en microscopie électronique à balayage avec canon à effet de champ (MEB FEG) sur des surfaces de 200 à 400 mm² (par des grossissements respectifs de x300, x1000, x10 000), et leurs densités surfaciques évaluées. Ainsi les densités et nature des inclusions des échantillons élaborés industriellement ont été précisées sur des bandes laminées à chaud de 3,5 mm d'épaisseur. Toutes les densités ont été ramenées à des densités surfaciques (un nombre d'inclusions par mm²).

**Tableau 2 : Taille des plus grosses inclusions observée sur échantillons laminés à chaud, et densités inclusionnaires (pour les inclusions de plus de 4 µm) des échantillons laminés à chaud en microscopie optique, et en microscopie électronique à balayage (pour les inclusions de plus de 1,5 µm)**

| | D circle max inclusion (µm) | Densité inclusionnaire (nombre par mm²) | |
|---|---|---|---|
| | | Mo (inclusions > 4µm) | MEB (inclusions > 1,5µm) |
| Ref 1 | 8 | 0,09 | 2,6 |
| Ref 2 | 8 | 0,5 | 15 |
| Inv 1 | 5 | 0,33 | |
| Inv 2 | 10 | 0,21 | |
| Inv 3 | 6 | 0,27 | |
| Inv 4 | 4 | 0,53 | |
| Inv 5 | 10 | 0,29 | |
| Inv 6 | 5 | 0,15 | |
| Inv 7 | 5 | 0,11 | |
| Inv 8 | 5 | 0,10 | |
| Inv 9 | 6 | 0,31 | |
| Inv 10 | 7 | 0,24 | |
| Inv 11 | 5 | 0,35 | |
| Inv 12 | 8 | 0,81 | |
| Inv 13 | 7 | 0,31 | 0,89 |
| Inv 14 | 8 | 0,32 | |
| Inv 15 | 5 | 0,19 | |
| Inv 16 | 10 | 0,28 | |
| Inv 17 | 10 | 0,32 | |
| Inv 18 | 10 | 0,29 | 1,10 |
| Inv 19 | 6 | 0,21 | 1,39 |
| Inv 20 | 5 | 0,48 | |
| Inv 21 | 10 | 0,30 | |
| Inv 22 | 10 | 0,32 | |
| Ref 23 | 10 | 0,42 | |
| Inv 24 | 7 | 0,45 | 1,10 |
| Ref 25 | 10 | 1,73 | |
| Ref 26 | 10 | 1,75 | |
| Inv 27 | 7 | 1,28 | |
| Inv 28 | 9 | 4,20 | |
| Inv 29 | 8 | 3,06 | |
| Inv 30 | 10 | 1,11 | |
| Inv 31 | 5 | 1,55 | |
| Inv 32 | 7 | 3,39 | |
| Inv 33 | 6 | 3,29 | |
| Inv 34 | 10 | 2,07 | |
| Inv 35 | 5 | 1,92 | |
| Inv 36 | 5 | 2,82 | |
| Inv 37 | 10 | 2,49 | |
| Inv 38 | 5 | 1,59 | |
| Inv 39 | 7 | 0,07 | |
| Inv 40 | 10 | 0,12 | |
| Inv 41 | 10 | 0,11 | |
| Inv 42 | 7 | 0,12 | |
| Inv 43 | 7 | 0,09 | |
| Inv 44 | 2 | 0,24 | |
| Inv 45 | 10 | 0,92 | |
| Inv 46 | 4 | 0,39 | |
| Inv 47 | 6 | 0,13 | |
| Inv 48 | 10 | 0,80 | |
| Inv 49 | 5 | 0,48 | |
| Ref 50 | 10 | 0,81 | |
| Ref 51 | 5 | 1,56 | |
| Réf 3 | 14 | 0,96 | |
| Réf 4 | 11 | 0,54 | 1,6 |
| Réf 5 | 11 | 0,69 | 2,1 |
| Inv 52 | 8 | 0,94 | |
| Inv 53 | 7 | 1,02 | |
| Inv 54 | 8 | 0,18 | |
| Inv 55 | 7 | 0,21 | |
| Inv 56 | 8 | 0,98 | |
| Inv 57 | 8 | 1,24 | |
| Ref 58 | 8 | 1,47 | |
| Inv 59 | 8 | 1,01 | |
| Inv 60 | 8 | 0,97 | |
| Réf 6 | 12 | 0,53 | |
| Inv 61 | 8 | 0,86 | |

Ces résultats montrent que dans le cas des échantillons selon l'invention, des densités inclusionnaires faibles et une absence complète d'inclusions de taille relativement importante peuvent être obtenues en ajustant la composition des matériaux et les procédés d'élaboration, à savoir pas d'inclusions supérieure à 10 µm sur produit laminé à chaud, et optimalement des densités inclusionnaires de l'ordre ou en deçà de celles des références. De telles inclusions sont également absentes de l'échantillon de référence 1, mais le nombre de petites inclusions d'oxydes (5 à 10 µm de diamètre) est significativement plus élevé que dans le cas des échantillons industriels (par exemple) selon l'invention, ce qui est défavorable aux propriétés en fatigue. Quant à l'échantillon de référence 2, il comporte une densité de nitrures trop élevée, y compris de nitrures de taille supérieure à 10 µm. Cette caractéristique est, à elle seule, rédhibitoire pour atteindre une tenue en fatigue suffisante, (de par la taille, la nature, la morphologie des nitrures) et il n'a pas été jugé utile de s'intéresser aux oxydes de cet échantillon.

Les échantillons selon l'invention ne comportent donc que des inclusions de faible diamètre, et en faible nombre (la taille relativement fine des inclusions a nécessité des comptages inclusionnaire en microscopie électronique à balayage afin d'évaluer un nombre représentatif d'inclusions accessibles par la résolution de l'équipement et d'en estimer précisément les dimensions à partir de 1,5 µm). En particulier il n'y a aucun nitrure de Ti, ce qui est à relier notamment à l'absence de Ti et à la très faible teneur en N. L'échantillon de référence 1 est dans le même cas, quoique la densité inclusionnaire et le diamètre de ses inclusions les plus grosses soient un peu plus élevés que dans les meilleurs cas de l'invention. Quant à l'échantillon de référence 2, il se confirme que les nitrures (de Ti principalement) y sont prépondérants et présents sous forme d'inclusions peu ductiles et de taille souvent excessive pour que les objectifs d'une excellente tenue en fatigue puissent être tenus.

De même, Ref 4 et Ref 5, à teneur en S accrue, et Ref 3 et Ref 6 à hautes teneurs en Al et Y respectivement, présentent des inclusions d'oxydes de taille importante, supérieure à 10 µm sur produits laminés à chaud.

Des comptages inclusionnaires en microscopie optique ont tout d'abord été initiés (pour une rapidité et facilité de mises en oeuvre), qui ont cependant rapidement trouvé leurs limites de par la faible taille des inclusions et leur faible nombre. De plus la microscopie optique utilisée dans le cadre de la présente invention pour des inclusions d'oxydes, de sulfures ou pour d'autres types de particules, peut introduire des artefacts par confusion des nuances de gris induites par la préparation des échantillons, la pollution de surface.... si les images des comptages ne sont pas correctement triées par un observateur expérimenté. Des comptages et analyses inclusionnaires automatisés en MEB avec EDX sont alors préférés, afin de donner une représentation plus fiable de la densité surfacique inclusionnaire des échantillons industriels produits selon l'invention.

On constate alors que si les échantillons selon l'invention peuvent présenter des inclusions inférieures en taille maximale à la référence 1 (exempte de Ti), la plupart des échantillons selon l'invention présentent, de plus, des densités inclusionnaires évaluées en microscopie électronique à balayage inférieures à celle de la référence (évaluée dans les mêmes conditions). Ainsi la densité d'inclusions de diamètre supérieur à 1,5 µm observée au MEB est faible, plus de deux fois inférieure à celle de la référence 1, et de surcroît les tailles des plus grosses particules observées sur coulées industrielles sont inférieures (d'environ 1 µm) à ce que l'on observe sur cette référence.

Le tableau 2 permet de préciser les domaines de compositions privilégiés au regard de la population inclusionnaire des aciers selon l'invention.

Les échantillons selon l'invention Inv 9 à 13 suggèrent que jusqu'à 4% de Cu (en maitrisant les procédés d'élaboration et la présence d'éléments résiduels selon l'invention), la taille maximale des inclusions semble contrôlée.

Les échantillons Inv 14 à 19, en revanche, suggèrent des compositions préférentielles en Nb inférieures ou égales à 2%, et dans cette gamme de composition, des teneurs en carbone inférieures à 0,007%, afin d'éviter la formation de carbures de taille supérieures à 10µm, ou de favoriser l'ajout d'éléments carburigènes autres, tels que Cr (autorisant des niveaux de carbone supérieurs en présence de Nb).

Les échantillons Inv 20 à 24 suggèrent une teneur en manganèse inférieure ou égale à 4% pour ne pas favoriser la formation d'inclusions de taille supérieure à 10 µm, et au delà de ces teneurs, la nécessité de contrôler précisément la proportion de carbone libre (en deçà de 10 ppm de préférence).

Les échantillons à bas Co (avec addition d'aluminium et éventuellement ajout de silicium et/ ou chrome), Ref 25, Ref 26, Inv 27 à 34, Inv 39 à 49, Inv 52, Inv 53, Inv 56 à 59, Inv 61, Réf 50 et Réf 51 présentent des inclusions inférieures ou égales à 10 µm (voire à 8 µm) en diamètre, notamment pour des teneurs associées en oxygène inférieures à 16 ppm.

L'homme du métier sait que la transformation à froid n'affectera la taille des inclusions qu'à la baisse, en les fractionnant éventuellement, mais ne peut en aucun cas accroitre ces dimensions.

Les nuances selon l'invention présentent l'avantage, de par leur composition chimique intrinsèque, de ne pas former de nitrures lors des élaborations, et de permettre de contrôler la taille et la nature des inclusions résiduelles, notamment d'oxydes. Grâce à un contrôle soigné des matières premières utilisées et aux procédés d'élaboration mis en oeuvre, qui procurent de basses teneurs en éléments résiduels N, S, C et P, et grâce à une désoxydation du métal liquide, les particules d'oxydes formées sont de tailles limitées, inférieures ou égales à 10 µm, de préférence inférieures à 8 µm, et de compositions adéquates obtenues par les gammes d'élaboration décrites. On forme alors, selon la composition de l'acier, des oxydes à base d'aluminium, par exemple des oxydes mixtes d'AI et de Mg (cet élément provenant inévitablement des laitiers et des réfractaires des récipients d'élaboration) ou d'alumine seule, mais aussi, des oxydes à base de Si, de Ca, Mg ou autres oxydes mixtes ; parfois quelques fins sulfures ou carbures étayent ses populations inclusionnaires.

Les propriétés mécaniques importantes des divers échantillons sont résumées dans les tableaux 3, 4 et 5, le tableau 3 concernant des échantillons au stade laminé à chaud, le tableau 4 concernant l'ensemble des échantillons à l'état laminé à chaud après recuit de vieillissement provoquant le durcissement par précipitation, et le tableau 5 caractérisant l'ensemble des échantillons à l'état laminé à froid puis vieilli (pour un traitement de référence à 480°C durant 3h). Les propriétés ont été mesurées dans le sens longitudinal par rapport à la direction de laminage de la bande. Ces propriétés sont la dureté Vickers HV 10 (pour les échantillons laminés à chaud), la résistance mécanique maximale en traction Rm (exprimée en MPa) pour les échantillons laminés à chaud vieillis, la limite élastique conventionnelle Rp_{0,2} (exprimée en MPa), la résistance mécanique maximale en traction Rm (exprimée en MPa), l'allongement réparti Ar (exprimé en % et mesuré à partir d'éprouvettes de longueur L₀ égale à 5,65 fois la racine carrée de la section initiale S₀) pour les échantillons laminés à froid, dans des états non vieillis et vieillis.

**Tableau 3 : Duretés Vickers Hv 10 des échantillons élaborés à l'état laminé à chaud**

| | | Hv | Moyenne | Ecart Type |
|---|---|---|---|---|
| Réf 1 | mesure 1 | 308 | 312 | 3,32 |
| | mesure 2 | 314 | | |
| | mesure 3 | 313 | | |
| Inv 13 | mesure 1 | 307 | 305 | 1,86 |
| | mesure 2 | 304 | | |
| | mesure 3 | 305 | | |
| Inv 18 | mesure 1 | 332 | 331 | 2,10 |
| | mesure 2 | 329 | | |
| | mesure 3 | 333 | | |
| Inv 19 | mesure 1 | 335 | 336 | 0,79 |
| | mesure 2 | 336 | | |
| | mesure 3 | 336 | | |
| Inv 24 | mesure 1 | 292 | 293 | 0,55 |
| | mesure 2 | 293 | | |
| | mesure 3 | 292 | | |
| Réf 3 | mesure 1 | 325 | 326 | 0,81 |
| | mesure 2 | 326 | | |
| | mesure 3 | 327 | | |
| Réf 4 | mesure 1 | 324 | 324 | 0,70 |
| | mesure 2 | 325 | | |
| | mesure 3 | 324 | | |
| Ref 5 | mesure 1 | 388 | 389 | 1,22 |
| | mesure 2 | 390 | | |
| | mesure 3 | 388 | | |
| Inv 53 | mesure 1 | 301 | 300 | 1,93 |
| | mesure 2 | 298 | | |
| | mesure 3 | 302 | | |
| Inv 56 | mesure 1 | 314 | 313 | 0,80 |
| | mesure 2 | 312 | | |
| | mesure 3 | 313 | | |
| Inv 57 | mesure 1 | 343 | 342 | 0,59 |
| | mesure 2 | 342 | | |
| | mesure 3 | 342 | | |
| Ref 58 | mesure 1 | 331 | 330 | 0,91 |
| | mesure 2 | 331 | | |
| | mesure 3 | 330 | | |
| Inv 59 | mesure 1 | 301 | 300 | 1,25 |
| | mesure 2 | 300 | | |
| | mesure 3 | 299 | | |
| Inv 60 | mesure 1 | 312 | 310 | 1,53 |
| | mesure 2 | 310 | | |
| | mesure 3 | 309 | | |
| Réf 6 | mesure 1 | 297 | 297 | 0,36 |
| | mesure 2 | 297 | | |
| | mesure 3 | 297 | | |
| Inv 61 | mesure 1 | 341 | 341 | 0,50 |
| | mesure 2 | 341 | | |
| | mesure 3 | 341 | | |

**Tableau 4 : Résistances à la traction Rm des échantillons à l'état laminé à chaud, vieilli**

| Echantillon | Rm à l'état laminé à chaud et vieilli (MPa) |
|---|---|
| Réf.1 | 2078 |
| Réf.2 | 1860 |
| Inv.1 | 1925 |
| Inv.2 | 2097 |
| Inv.3 | 951 |
| Inv.4 | 590 |
| Inv.5 | 1883 |
| Inv.6 | 1941 |
| Inv.7 | 2016 |
| Inv.8 | 2136 |
| Inv.9 | 1869 |
| Inv.10 | 1870 |
| Inv.11 | 1945 |
| Inv.12 | 990 |
| Inv.13 | 2067 |
| Inv.14 | 1927 |
| Inv.15 | 2026 |
| Inv.16 | 1981 |
| Inv.17 | 1479 |
| Inv.18 | 2109 |
| Inv.19 | 2198 |
| Inv.20 | 1917 |
| Inv.21 | 2068 |
| Inv.22 | 630 |
| Ref.23 | 510 |
| Inv.24 | 886 |
| Ref.25 | 489 |
| Ref.26 | 544 |
| Inv.27 | 1318 |
| Inv.28 | 1342 |
| Inv.29 | 1512 |
| Inv.30 | 1379 |
| Inv.31 | 1379 |
| Inv.32 | 1406 |
| Inv.33 | 1672 |
| Inv.34 | 1794 |
| Inv.35 | 1651 |
| Inv.36 | 1724 |
| Inv.37 | 1949 |
| Inv.38 | 1984 |
| Inv.39 | 1329 |
| Inv.40 | 1388 |
| Inv.41 | 1622 |
| Inv.42 | 1606 |
| Inv.43 | 1581 |
| Inv.44 | 1498 |
| Inv.45 | 1673 |
| Inv.46 | 1661 |
| Inv.47 | 1683 |
| Inv.48 | 1659 |
| Inv.49 | 1685 |
| Ref.50 | 1702 |
| Ref.51 | 1802 |
| Ref 3 | 2498 |
| Réf 4 | 2089 |
| Réf 5 | 2354 |
| Inv 52 | 1712 |
| Inv 53 | 1820 |
| Inv 54 | 2668 |
| Inv 55 | 2730 |
| Inv 56 | 2107 |
| Inv 57 | 2361 |
| Ref 58 | 2503 |
| Inv 59 | 2078 |
| Inv 60 | 2065 |
| Ref 6 | 2384 |
| Inv 61 | 2349 |

**Tableau 5 : Propriétés mécaniques des échantillons à l'état laminé à froid brut et à l'état laminé à froid et vieilli**

| Etat | | Epaisseur mm | Largeur mm | Surface observée mm² | Rm Mpa | Rp0,2 Mpa | Ar (%) | Hv 1 | | | HV 1 Moyenne |
|---|---|---|---|---|---|---|---|---|---|---|---|
| brut écroui | Ref 1 | 0,42 | 7,00 | 2,92 | 1198,40 | 1126,50 | 5,73 | 369 | 372 | 370 | 370 |
| vieilli | | 0,42 | 7,00 | 2,93 | 2132,45 | 2101,70 | 2,63 | 622 | 621 | 618 | 620 |
| brut écroui | Inv 13 | 0,42 | 7,00 | 2,94 | 1298,33 | 1274,00 | 5,50 | 378 | 373 | 375 | 375 |
| vieilli | | 0,42 | 7,00 | 2,93 | 2067,33 | 2041,00 | 3,13 | 595 | 604 | 600 | 600 |
| brut écroui | Inv 18 | 0,416 | 7,00 | 2,91 | 1276,67 | 1254,67 | 5,87 | 371 | 373 | 370 | 371 |
| vieilli | | 0,42 | 7,00 | 2,92 | 2109,00 | 2092,00 | 1,77 | 622 | 624 | 618 | 621 |
| brut écroui | Inv 19 | 0,43 | 7,00 | 2,98 | 1087,33 | 1071,67 | 9,73 | 328 | 330 | 324 | 327 |
| vieilli | | 0,43 | 7,00 | 3,00 | 2189,33 | 2172,00 | 1,97 | 615 | 625 | 617 | 619 |
| brut écroui | Inv 24 | 0,42 | 7,00 | 2,97 | 1141,33 | 1109,00 | 9,80 | 365 | 371 | 369 | 368 |
| vieilli | | 0,42 | 7,00 | 2,94 | 885,67 | 388,67 | 42,60 | 185 | 177 | 179 | 180 |
| brut écroui | Réf 3 | 0,42 | 7,00 | 2,96 | 1736,25 | 1685,26 | 6,34 | 512 | 514 | 510 | 512 |
| vieilli | | 0,42 | 7,00 | 2,94 | 2512,54 | 2483,70 | 3,75 | 740 | 740 | 739 | 739 |
| brut écroui | Inv 54 | 0,42 | 7,00 | 2,92 | 1564,70 | 1532,63 | 7,56 | 461 | 461 | 460 | 461 |
| vieilli | | 0,42 | 7,00 | 2,91 | 2687,24 | 2654,23 | 5,02 | 791 | 790 | 790 | 790 |
| brut écroui | Inv 55 | 0,42 | 7,00 | 2,93 | 1604,26 | 1576,35 | 7,32 | 329 | 334 | 331 | 331 |
| vieilli | | 0,42 | 7,00 | 2,94 | 2736,45 | 2704,68 | 4,71 | 804 | 805 | 806 | 805 |
| brut écroui | Inv 56 | 0,42 | 7,00 | 2,92 | 1529,50 | 1492,10 | 5,68 | 452 | 452 | 451 | 451 |
| vieilli | | 0,42 | 7,00 | 2,92 | 2238,76 | 2204,30 | 4,12 | 659 | 658 | 658 | 658 |
| brut écroui | Inv 57 | 0,42 | 7,00 | 2,94 | 1488,46 | 1445,98 | 3,84 | 438 | 439 | 438 | 438 |
| vieilli | | 0,42 | 7,00 | 2,92 | 2365,40 | 2340,28 | 2,83 | 696 | 696 | 698 | 697 |
| brut écroui | Ref 58 | 0,42 | 7,00 | 2,93 | 1592,58 | 1567,36 | 5,24 | 468 | 468 | 469 | 468 |
| vieilli | | 0,42 | 7,00 | 2,91 | 2546,59 | 2516,36 | 3,57 | 749 | 748 | 750 | 749 |

Les caractéristiques mécaniques obtenues sur les échantillons selon l'invention à l'état vieilli laminé à chaud et/ou froid sont voisines, voire améliorées, par rapport aux références. Ainsi les nuances selon l'invention allient un attrait économique (par des coûts matière moindre en réduisant les enfournements de Ti, Co...) à des propriétés mécaniques élevées. Pour chaque élément d'alliage Nb, Cu, Mn, W, Ta, V, une résistance maximale en traction à l'état vieilli de plus de 1950 MPa est accessible en ajustant la composition et le procédé de mise en oeuvre.

Le tableau 4 illustre des Rm > 2000 MPa sur état laminé à chaud pour des teneurs ajustées en éléments d'addition, permettant d'obtenir des structures martensitiques capables de vieillissement (ainsi si par exemple le Nb illustre des propriétés durcissantes intéressantes au travers des échantillons Inv 14 à 19, le Mn en revanche suggère des teneurs inférieures ou égales à 4% et/ou de contrôler la teneur en Cr ajouté pour éviter la formation d'austénite dominante...). De plus les nuances Inv 27 à 49, Inv 52 et Inv 61 selon l'invention suggèrent des teneurs en Co + Mo supérieures à 9%, de préférence supérieures à 15% pour atteindre des caractéristiques mécaniques à l'état vieilli au moins équivalentes aux références Ref 1 et Ref 3.

Le compromis entre ces propriétés mécaniques alliées à une population inclusionnaire maîtrisée grâce à des conditions d'élaboration soignées illustre déjà le caractère innovant de l'invention, qui se double de l'amélioration des propriétés en surface après nitruration des matériaux pour les applications sollicitées en fatigue.

Les conditions de vieillissement ont été testées sur produits laminés à chaud et à froid en vue de leur optimisation (après recuit de standardisation ou mise en solution).

Un recuit de mise en solution à 850°C pendant 1h en atmosphère réductrice a été mis en oeuvre préalablement sur chaque nuance, permettant d'accéder à une structure homogène. Puis différents couples (temps-température) ont été expérimentés sur ces matériaux recuits afin de préciser des conditions de vieillissement adaptées aux applications visées et nuances investies.

Puis selon les conditions de vieillissement testées, sous argon entre 420°C et 550°C, les optimums en termes de dureté après vieillissement et de phases en présence ont été précisés.

Les nuances Inv 1 à 4 qui contiennent du V présentent des conditions de vieillissement identiques à celles communément usitées pour les références 1 et 2 (par exemple entre 450° et 500°C pour des traitements ≤ 3h), et permettent d'atteindre des Rm à l'état vieilli supérieures à 1900 MPa pour des teneurs en V ≤ 4% ; les nuances Inv 5 à 8 qui contiennent du Ta présentent des caractéristiques mécaniques accrues (Rm > 1940MPa) dès 0,5 % de Ta ajouté dans des conditions de vieillissement similaires. Les nuances Inv 9 à 13 contenant du Cu présentent des conditions de vieillissement optimisées vers 500°C pour des traitements ≤ 2h (ou 480°C-3h) permettant d'atteindre des Rm à l'état vieilli supérieures à 1940 MPa dès l'ajout de 2% de Cu ; ces performances en vieillissement se voient accrues en présence de Cr (< 2%) et de Mn (< 1%) en accompagnement du durcissement structural, soit pour des teneurs en Co + Mo + Cu + Cr + Mn < 25% . Les nuances Inv 14 à 19 qui contiennent du Nb présentent des caractéristiques mécaniques supérieures à Réf 2 après vieillissement dès de faibles proportions de Nb ajoutées, et ce dans un vaste domaine de conditions de vieillissement de 420°C à 550°C pour des durées de 30 minutes à 5h. Un optimum de traitement entre 450°et 500°C pendant 2h est proposé.

L'ajout dans des proportions contrôlées de Cr et Mn accroît le durcissement par vieillissement. Ces nuances, toutefois, nécessitent de contrôler la teneur en Nb afin d'éviter la formation d'amas inclusionnaires, ou de particules de taille supérieure aux valeurs maximales exigées par l'invention. Ainsi une teneur en Nb ≤ 4% est imposée.

Les nuances Inv 20 à 24 et Réf 25 et 26 qui contiennent du Mn de façon notable (plus de 0,19%) constituent les nuances pouvant être biphasées, nécessitant d'obtenir une structure majoritairement martensitique afin de réaliser un vieillissement optimal. Ainsi des nuances à teneurs en Mn relativement limitées (traces ≤ Mn ≤ 4%) permettent d'accéder à des Rm > 1940 MPa pour des conditions de vieillissement identiques à celles communément usitées pour les références 1 et 2, (par exemple entre 450° et 500°C pour des traitements ≤ 3h). Dans ces proportions contrôlées de Mn, l'ajout maitrisé d'Al, Si ou Cr accroît le durcissement par vieillissement à conditions de maintenir une structure martensitique préalablement au vieillissement.

Les nuances Réf 25 et 26 sont, cependant, hors de l'invention, du fait de leur teneur en Mn qui dépasse 13,0%. De fait, leur population inclusionnaire telle que décrite dans le tableau 2 n'est pas optimale, quoiqu'elle soit à la limite de l'acceptable pour la taille maximale des inclusions : les plus grosses inclusions ont un diamètre équivalent de 10 µm et leurs densités inclusionnaires de 1,73 et 1,75 inclusions/mm² sont parmi les plus élevées pour cette classe de taille. Et le tableau 4 montre que leurs Rm à l'état laminé à chaud et vieilli sont franchement basses (489 et 544 MPa).

Dans les aciers de l'invention comme dans les aciers de référence, la base des propriétés mécaniques des aciers maraging réside dans le durcissement par vieillissement provoqué conjointement par Co et Mo (et autres éléments d'addition). Ainsi de faibles teneurs en Co (typiquement Co < 5%) et/ou en Mo (typiquement Mo < 5%) ne permettent pas d'atteindre après vieillissement des Rm de plus de 1530 MPa. L'emploi de proportions plus importantes de Co (entre 5 et 16%) ou de Mo (entre 3 et 9%) permet ensuite d'accéder à des gammes supérieures de propriétés mécaniques (résistance à la traction, endurance en fatigue....). Ces tendances sont confirmées par les caractérisations des échantillons Inv 39 à 49 (pour des teneurs en Co de 2 à 7%), qui montrent que l'ajout d'Al, Si ou Cr ne permet pas de compenser en termes de Rm dans les teneurs visées ; soit : pour Co : 1,0 à 10,0% et Mo = 5% environ, des résistances maximales à la traction Rm, après vieillissement de 1800 MPa ne peuvent être dépassées, quels que soient les ajouts d'Al jusqu'à 1%, de Si jusqu'à 0.13%, de Ti jusqu'à 0,1%, ou de Cr jusqu'à 0,5%.

L'objectif de l'invention réside dans un ajustement de propriétés mécaniques apportées à une base donnée par des teneurs initiales en éléments Co, Mo choisies selon les performances visées, sans détériorer la population inclusionnaire et le comportement en fatigue des matériaux, et à coût moindre. Dans beaucoup des exemples selon l'invention, des résistances à la traction Rm supérieures à 1900 MPa après vieillissement sont visées et obtenues, avec également des inclusions de taille définie et contrôlée, notamment pour garantir un bon comportement en fatigue. D'autres cibles d'endurance et de propriétés mécaniques peuvent être visées et obtenues avec différentes variantes de l'invention en ajustant les teneurs en éléments : Co, Mo, W, Cu, V, Nb, Mn, Si, Al, Cr, notamment.

Ainsi les nuances Inv 27 à 38 contenant des quantités relativement importantes de W et AI peuvent présenter des caractéristiques mécaniques supérieures à Réf 2 à l'issue du vieillissement pour des teneurs en W de préférence supérieures à 0,8% et des teneurs en Co supérieures à 10%. Ces performances après vieillissement se voient accrues avec l'ajout d'AI ou de Cr en accompagnement du durcissement structural. Typiquement des conditions de vieillissement identiques à celles communément usitées pour les nuances Réf 1 et 2, permettent d'atteindre des Rm à l'état vieilli de plus de 1940 MPa pour les compositions Inv 37 et Inv 38.

On notera que les nuances Inv 48 et Inv 49 ont des teneurs en Ti à la limite de l'acceptable (0,109%), qui peuvent être considérées comme égales à 0,1% compte tenu des arrondis et de la précision habituelle des analyses. Elles ne sont pas parmi les toutes meilleures sur la valeur de Rm, et Inv 48 a un diamètre équivalent maximal d'inclusions à la limite de l'admissible et une densité inclusionnaire qui n'est pas optimale. Ces nuances montrent que la limite de 0,1% de Ti est bien à respecter pour demeurer dans le cadre de l'invention.

Les nuances Réf 50 et Réf 51 ont des teneurs en S (0,004 et 0,0053%) excédant la limite admisssible (0,002%). De fait, leurs populations inclusionnaires ne sont pas optimales. Réf 50 a un diamètre équivalent maximal des inclusions de 10 µm, donc à la limite de l'admissible, et une densité inclusionnaire de 0,81 inclusions/mm², ce qui est relativement moyen. Réf 51 a des inclusions plus petites mais aussi plus nombreuses. Leurs Rm à l'état laminé à chaud et vieilli est de 1700 à 1800 MPa, ce qui n'est pas optimal. Et la fragilisation des joints de grains induite par ces teneurs en S un peu trop élevées rend la transformation à chaud plus difficile que ce qui est souhaitable.

Inv 52 et Inv 53 sont comparables à Ref 50 et Ref 51, à ceci près que leurs teneurs en S sont moindres et conformes à l'invention. Leur Rm à l'état laminé à chaud et vieilli est donc un peu améliorée, et ils ont une meilleure endurance en fatigue et une meilleure capacité à être transformés à chaud.

Inv 54 et Inv 55 se caractérisent par leur haute teneur en Mo (9,9 et 11,8% environ). Leurs propriétés mécaniques sont élevées. Des teneurs en C, Al ou Cr un peu plus élevées que pour d'autres exemples selon l'invention leur assurent un rapport qualité/prix acceptable, même s'il n'est pas optimal. Ces exemples illustrent l'effet du Mo sur les propriétés mécaniques, mais ne répondent qu'en partie aux objectifs économiques que l'on s'était fixés.

Inv 56 est représentatif d'une nuance à teneur élevée en AI. Inv 57 y ajoute du Cr et Ref 58 du Cr et du Zr en quantités notables. Ces exemples présentent, grâce à l'addition des éléments cités, des propriétés intéressantes qui peuvent être optimisées à partir des teneurs préférentielles affichées précédemment.

Inv 59 présente des teneurs en Si et Y élevées.

Ref 3 a une teneur en AI trop élevée, et contient donc de trop grosses inclusions qui n'ont pu être éliminées, et sont défavorables aux applications sollicitées en fatigue visées.

Ref 4 et Ref 5 contiennent trop de S, qui forme donc trop de sulfures qui, de plus, servent de sites de germination à des oxydes, expliquant la présence de trop grosses inclusions sur produit laminé à chaud.

Ref 6 a une teneur excessive en Y, qui forme des inclusions oxydées de trop grosse taille, qui n'ont pas pu être éliminéesz par décantation du métal liquide.

Inv 60 est représentatif d'une présence élevée de Ca et Inv 61 d'une présence élevée de Mg. Ils montrent que dans le cadre de l'invention, ces deux désoxydants peuvent être utilisés en quantités non négligeables, en imposant toutefois le respect des règles connnues de l'homme du métier en termes de propriétés des réfractaires et d'affinage..

Il est notable ici que les nuances selon l'invention sont compatibles avec des conditions de vieillissement qui autorisent des caractéristiques mécaniques accrues, mais qu'elles présentent en plus des facilités de mises en oeuvre tant en termes de procédés que de coûts associés. En effet la stabilité des propriétés obtenues, notamment la dureté, permet la mise en oeuvre de recuits de courtes durées (typiquement 30 minutes) pour obtenir des propriétés identiques ou comparables à celles obtenues par des traitements d'une durée de 2 à 5 h sur des nuances classiques. Ces qualités de simplicité et d'économie des traitements thermiques sont particulièrement avantageuses pour ces nuances économiques visées selon l'invention.

Les nouvelles nuances selon l'invention présentent des propriétés mécaniques (dureté, limite élastique, résistance à rupture...) intéressantes pouvant être optimisées pour certaines applications, dites en endurance « illimitée », destinées à être fortement sollicitées en fatigue Ainsi, ces conditions de vieillissement et une population inclusionnaire optimisées selon l'invention permettent, grâce à des traitements surfaciques ultérieurs (nitruration, carbonitruration, cémentation, grenaillage...), d'accéder à des propriétés améliorées lors de sollicitations dynamiques, en fatigue par exemple.

Enfin, les propriétés améliorées de ces nuances selon l'invention ont aussi été testées après un traitement de mise en compression de la surface. En l'occurrence, sur des matériaux à fines épaisseurs, sollicités en fatigue, des traitements de nitruration ont été mis en oeuvre avant sollicitation, afin de retarder l'amorce de fissuration en surface. Cette mise en compression peut aussi être réalisée par un grenaillage, de façon connue.

Ainsi, diverses conditions de nitruration ont été testées pour les nuances selon l'invention, parmi lesquelles des traitements compris entre 420 et 480°C de 30 à 90 min en atmosphère gazeuse (sous une atmosphère de NH₃ craqué).

Les couches nitrurées sont alors constituées par la diffusion d'azote au sein des diverses matrices, constituant des épaisseurs caractéristiques de quelques dizaines de µm, évaluées par attaque chimique ou profil par spectrométrie à décharge luminescente (SDL). Elles contiennent parfois des précipités fins uniformément distribués, dont on peut éventuellement, si utile, ajuster la nature chimique en jouant sur la composition de l'acier et les conditions de nitruration.

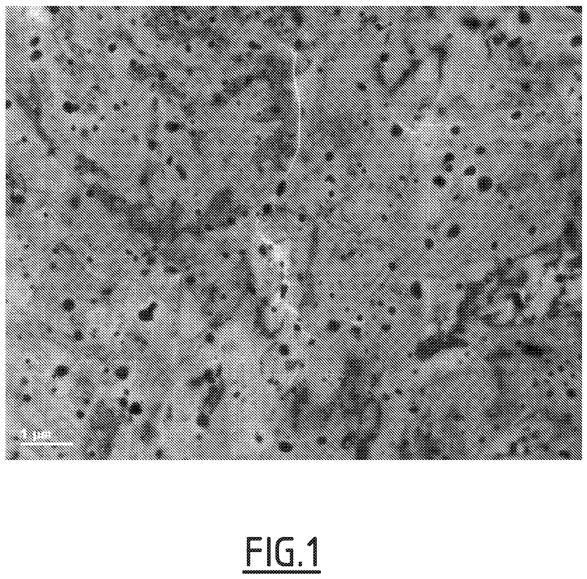

La figure 1 illustre la densité de phases durcissantes obtenues sur l'échantillon Inv.15 après nitruration à 420°C pendant 30 min, par caractérisation au microscope électronique à transmission sur lame mince. Les précipités durcissants sont essentiellement des MoₓNb_{y} (avec x = 2y environ) uniformément répartis, dont la taille varie de 80 à 400 nm. On trouve aussi quelques carbures de Nb et de Mo et des nitrures, de dimensions moindres, et de stoechiométrie et paramètres de maille spécifiques.

Dans les gammes de températures et de durées explorées, les nuances selon l'invention révèlent des propriétés de surface accrues après nitruration. Le tableau 6 illustre à titre d'exemple des niveaux de dureté évalués par micro indentation selon des modalités identiques (moyenne de trois mesures de Hv 0,1 réalisées en surface). Les diverses conditions de nitruration ont été investies en nitruration gazeuse sous NH₃ craqué ; ces conditions peuvent être de même adaptées en nitruration ionique, carbonitruration ou autres afin d'obtenir des propriétés similaires.

**Tableau 6 : Duretés Hv0,1 moyennes évaluées par micro-indentation en extrême surface selon différentes conditions de nitruration.**

| | 420°C | | | 450°C | | | 480°C | | | 510°C |
|---|---|---|---|---|---|---|---|---|---|---|
| | 30 min | 60 min | 90 min | 30 min | 60 min | 90 min | 30 min | 60 min | 90 min | 30 min |
| Réf 1 | 623 | 949 | 613 | 794 | 911 | 943 | 820 | 930 | 890 | 792 |
| Réf 2 | 775 | 730 | | 923 | 843 | | 900 | | | 680 |
| Réf 51 | 325 | 320 | | 488 | 285 | | 355 | | | 613 |
| Inv 1 | 643 | 643 | | 698 | 808 | | 790 | | | 403 |
| Inv 6 | 623 | 735 | | 815 | 608 | | 623 | | | 575 |
| Inv 7 | 578 | 370 | | 588 | 620 | | 940 | | | 787 |
| Inv 8 | 1033 | 475 | | 778 | 638 | | 920 | | | 747 |
| Inv 9 | 803 | 875 | | 623 | 670 | | 485 | | | 762 |
| Inv 10 | 705 | 888 | | 530 | 810 | | 805 | | | 475 |
| Inv 11 | 803 | 658 | | 665 | 885 | | 755 | | | 777 |
| Inv 13 | 325 | 870 | 910 | 995 | 835 | 1025 | 1030 | 900 | 908 | |
| Inv 14 | 853 | 1070 | | 730 | 593 | | 875 | | | 743 |
| Inv 15 | 810 | 790 | | 568 | 543 | | 665 | | | 713 |
| Inv 16 | 523 | 590 | | 580 | 490 | | 473 | | | 598 |
| Inv 18 | 750 | 1280 | 635 | 1018 | 885 | 653 | 1088 | 815 | 890 | |
| Inv 21 | 558 | 548 | | 405 | 815 | | 823 | | | 837 |
| Inv 24 | 380 | 1160 | 305 | 1030 | 320 | 543 | 380 | 908 | 625 | |
| Inv 38 | 220 | 215 | | | 275 | | | | | 280 |
| Ref 3 | 748 | | | 882 | | | 1019 | | | 1048 |

Il doit être entendu que les incertitudes de mesure sur ce type d'essais sont importantes lorsque que, comme c'est le cas ici, les essais sont réalisés sur des échantillons à surfaces brutes et empreintes locales. Il faut donc interpréter les résultats du tableau 7 en termes de tendance générale.

Ainsi, en sus d'excellentes propriétés mécaniques, de coûts matières maîtrisés et d'une population inclusionnaire contrôlée, les échantillons selon l'invention présentent une aptitude à la nitruration permettant d'accéder à des niveaux de duretés en surface accrues ainsi qu'une résistance accrue aux frottements, par rapport aux échantillons de référence 1 et 2. Ainsi, des niveaux de dureté similaires en extrême surface par rapport aux références 1 et 2 peuvent être escomptés (par exemple Hv0,1 > 900), voire pour certaines nuances selon l'invention des gains de plus de 50 Hv0,1 en extrême surface, sont accessibles pour des durées de nitruration réduites. On peut ainsi atteindre des duretés d'extrême surface de plus de 1000 Hv0,1 (voire 1050 Hv0,1) sur les nuances selon l'invention, dans des conditions de nitruration adéquates et qui ne sont pas particulièrement exigeantes.

Toutefois pour certaines applications sollicitées en fatigue, il convient de ne pas atteindre des niveaux de dureté trop importants en surface (dureté Hv0,1) par rapport au coeur vieilli du matériau (dureté Hv10) afin d'éviter de fragiliser l'interface interne ou les extrêmes surfaces. A ces fins, des profils de diffusion de l'azote évoluant de façon régulière selon la profondeur du matériau sont préférés à des profils de diffusion abrupts conduisant à la présence de zones de précipitation importantes et hétérogènes en surface. Dans les aciers, ces domaines sont appelés « couche de combinaison », et sont constitués par exemple de nitrures de fer fragiles et extrêmement durs. Dans ce contexte, il a été vérifié, pour les échantillons selon l'invention, l'existence de conditions de nitruration gazeuse permettant d'éviter la formation de nitrures de fer en extrême surface, tout en maintenant des niveaux de contraintes suffisants en surface pour retarder l'amorce de fissuration en sollicitation dynamique en service (dans les domaines de dureté de surface visée).

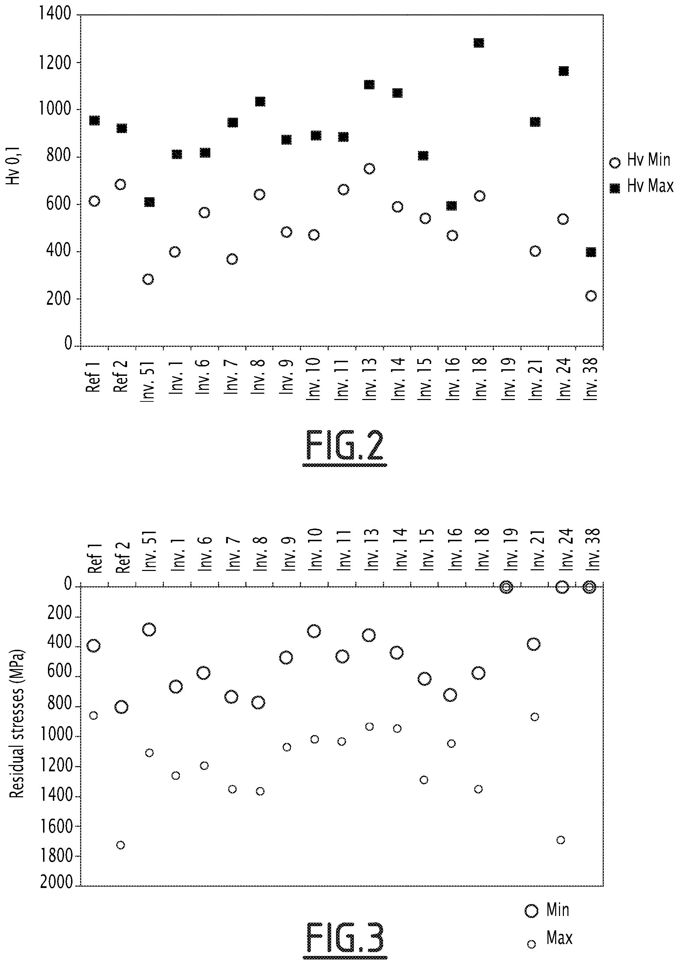

Les valeurs minimales et maximales de dureté atteintes en extrême surface (duretés Hv0,1) selon les différentes conditions de nitruration (température, durée) sont reportées dans la figure 2. On y voit que des niveaux de dureté en extrême surface supérieur à 900 Hv0,1 sont accessibles pour chaque grande famille d'élément durcissant présent selon l'invention. On peut ainsi accéder à des propriétés de surface en fatigue au moins équivalentes à celles des références précédemment citées.

On constate que les nuances au Mn ou Cu élaborées sur les outils industriels avec un ajout quantifié de Cr peuvent présenter des duretés accrues en extrême surface après nitruration par rapport aux nuances selon l'invention exemptes de Cr, et qu'un effet similaire peut être escompté en ajoutant des proportions définies d'AI conjointement à un élément durcissant (comme le Ta, voir Inv 8).

Ainsi pour des niveaux de Co et Mo suffisants pour obtenir les propriétés mécaniques visées détaillées précédemment, l'invention illustre la possibilité d'atteindre des duretés en extrême surface supérieures à 900 HV0.1 pour chaque famille de nuances selon :
- des valeurs inférieures à 900 Hv0.1 sont observées sur les nuances au vanadium pour des teneurs en éléments durcissants inférieures à 0.5% ; au-delà, des duretés accrues sont attendues en extrême surface ;
- pour les nuances au Tantale selon l'invention (Inv 6 à 8 du tableau 7) des niveaux de dureté supérieurs à 940 Hv 0,1 sont atteints en extrême surface dès 3% de Ta ajoutés (avec des conditions de nitrurations ajustées) ;
- Les nuances au Cu présentent de même des niveaux de dureté (et contraintes résiduelle) accrus en extrême surface dès 2% d'élément durcissant et en présence de Cr et Mn (Inv 13) ; ces éléments favorisant la solubilité de l'azote en surface ;
- Les nuances selon l'invention 14 à 18 suggèrent en revanche des niveaux de vanadium inférieurs à 2% afin d'atteindre des niveaux de dureté suffisants en extrême surface (exempts de couche de combinaison).
- Les nuances au Mn présentant un bon compromis propriétés mécaniques-population inclusionnaire présentent des niveaux de dureté accrus en extrême surface en présence de Cr (Inv 24).
- Les nuances au W et Al testées (Inv 38 et Ref 51) n'ont pas permis de préciser à ce jour les conditions de nitruration permettant d'atteindre des niveaux de dureté élevés en extrême surface.

Enfin, on a vérifié que ces duretés importantes accessibles en surface s'accompagnent de contraintes résiduelles maitrisées (évaluées par diffraction des rayons X) permettant de mettre la surface en compression par rapport à la matrice et retarder ainsi l'amorce de fissuration en surface.

La figure 3 est une évaluation qualitative des contraintes résiduelles de compression en surface des tôles laminées nitrurées, pour les échantillons Réf 1, Réf 2, et divers échantillons selon l'invention. Pour chaque échantillon on a porté les valeurs minimales et maximales des contraintes de compression évaluées pour l'ensemble des essais effectués en faisant varier les températures et les durées de nitruration. L'évaluation des contraintes résiduelles au sein des couches nitrurées a été réalisée en surface des échantillons par diffraction des rayons X avec les paramètres suivants : Chi variant de 0 à 51°, intervalle de mesure 1s, sin² (psi) de 0 à 0,6 par pas de 0,1. Les valeurs obtenues dans ces conditions permettent de déterminer, en suivant l'évolution de la position de la raie du Fe, le niveau de contraintes en surface du matériau. On voit que les contraintes résiduelles des échantillons selon l'invention sont améliorées par rapport à celles observées sur les échantillons de référence 1.

Ainsi, il est plus aisé, par l'utilisation de l'invention, de maîtriser les propriétés de la couche nitrurée et, donc, de l'adapter aux besoins particuliers de l'utilisation envisagée pour les futurs produits. Si cela paraît préférable, on peut ainsi aisément éviter la présence en extrême surface de phases communément appelées « couches de combinaison » au sein des couches nitrurées. Ces phases résultent de la précipitation de nitrures de fer de types Fe₄N, Fe₂N, Fe₂N₁₋ₓ notamment.

Les caractérisations des couches nitrurées de certains échantillons (de référence Ref 1 et selon l'invention Inv 13, Inv 18, Inv 21 et Inv 24) ont été complétées par l'exécution d'essais appelés communément « scratch tests », dérivés des « essais de rayage », ou « essais sclérométriques » et s'en distinguant par la notion de faible charge appliquée.

Ces essais consistent à générer des appuis à travers le système couche nitrurée-substrat, à l'aide d'une pointe sphéro-conique, telle qu'une pointe diamant pour essais de dureté Rockwell C (angle de 120°, rayon de courbure de la pointe 100 µm), en appliquant une vitesse de défilement du substrat constante et une charge croissante à la pointe.

La dégradation d'un revêtement sous l'application d'une charge est une combinaison des contraintes d'indentation élastiques et/ou plastiques, des contraintes de frottements ainsi que des contraintes résiduelles internes au matériau.

Sous de faibles charges, ces contraintes peuvent être la cause d'une fissuration en tension ou en compression de la surface du revêtement, qui continue cependant à adhérer au substrat.

Le scratch test est un test comparatif permettant ainsi d'obtenir la détection d'une onde sonore lors de la propagation d'éventuelles microfissures dans le matériau et la profondeur de pénétration de l'outil d'indentation durant l'appui (par rapport à la surface réelle initialement palpée), et d'évaluer la profondeur résiduelle du revêtement sur le chemin d'essai à l'issue du test. Cette dernière estimation permet d'évaluer le retour élastique du système revêtement-substrat ou surface-substrat à l'issue de l'application d'une charge croissante, à faibles charges.

Sur chaque système, trois mesures successives sont exécutées à la surface des échantillons nitrurés, espacées de 1mm, en appliquant une charge croissante de 0,03 à 10 N sur 10 mm de la surface nitrurée.

Ainsi, si, pour les divers échantillons selon l'invention, les résultats diffèrent peu en termes d'évaluation de la force normale, ou des profondeurs de pénétration, certaines caractéristiques des couches nitrurées selon l'invention se distinguent, cependant.

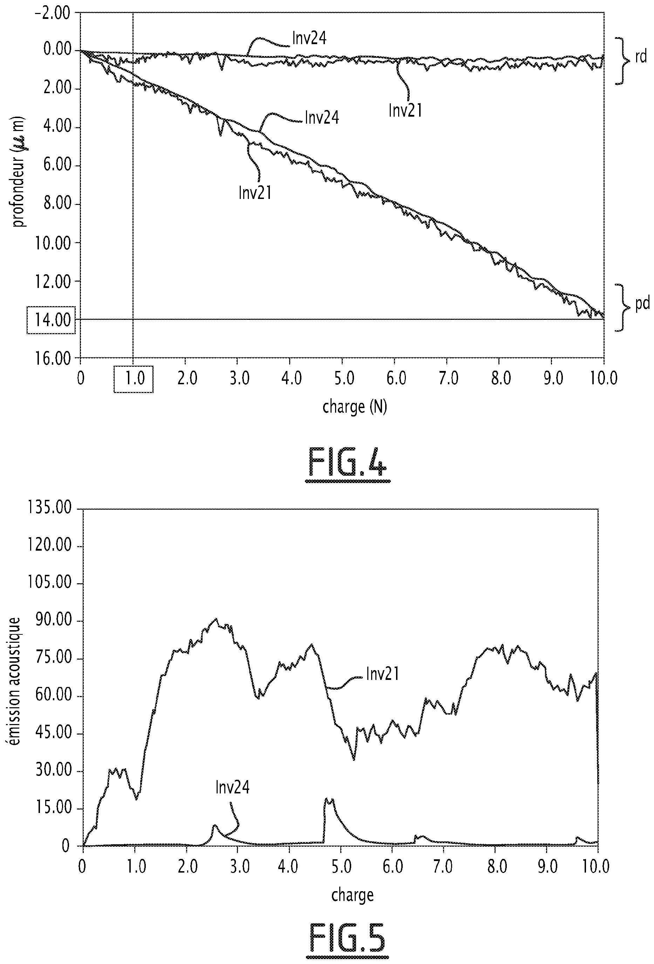

Ainsi la figure 4 illustre le retour élastique du système couche nitrurée-substrat à l'issue du scratch test par différence relative des profondeurs de pénétration (courbes significativement décroissantes) et des profondeurs résiduelles à l'issue du scratch test sur les échantillons nitrurés Inv. 21 et Inv. 24 (respectivement traités à 480 et 450°C durant 30 minutes sous atmosphère gazeuse).

Inv 21 est un exemple contenant du Mn (1,970%) et où la teneur en Cr (0,007%) ne résulte que des impuretés présentes dans les matières premières utilisées. Inv 24 est un exemple contenant 1,930% de Mn, donc une teneur comparable à celle de Inv 21, mais associée à une teneur en Cr de 0,902%, donc correspondant à un ajout très significatif de Cr. Ces deux échantillons donnent des résultats comparables sur les profondeurs de pénétration lors de la phase d'appui du scratch test, mais les courbes sont plus irrégulières dans le cas de Inv 21 que dans le cas de Inv 24.

La figure 5 illustre les résultats d'émission acoustique associés lors du scratch test sur ces deux mêmes échantillons Inv 21 et Inv 24 nitrurés. ici, les différences sont nettement plus significatives, ces émissions étant plus élevées dans le cas de Inv 21 que dans celui de Inv 24.

Ainsi l'ajout de Mn associé à un ajout de Cr révèle un bruit moindre sur les profondeurs évaluées, ce qui se retrouve dans la réduction significative d'émission acoustique de Inv. 24 nitruré (figure 5).

Un tel comportement est aussi observé sur d'autres nuances selon l'invention contenant du Cr.

Il s'avère donc que la présence significative de Cr réduit la fissuration potentielle des couches nitrurées des nuances selon l'invention, sous l'application de faibles charge (< 10 N), ce qui est le cas notamment lors de l'utilisation de pièces sollicitées en fatigue soumises localement à des frottements, appuis ou frictions de pièces entre elles.

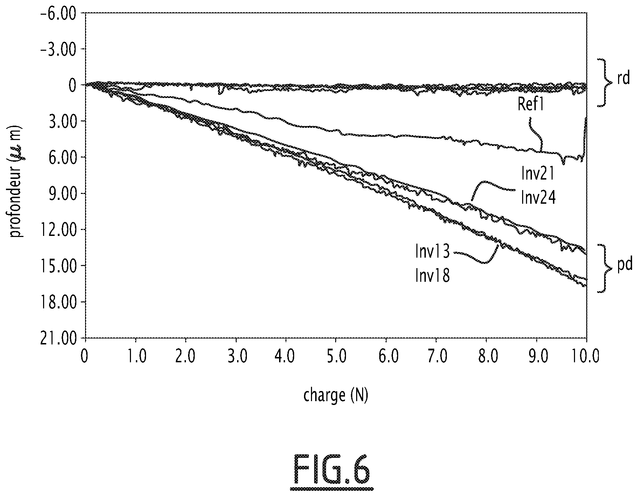

De même la figure 6 illustre le comportement élastique de l'ensemble couche nitrurée-substrat à l'issue du scratch test sur les échantillons nitrurés Inv. 13, Inv. 18, Inv. 21 et Inv. 24, en comparaison avec l'échantillon Ref 1 (courbes moyennes des trois essais réalisés par échantillon, respectivement traités sous atmosphère gazeuse à 480 - 30 minutes pour Inv. 13, Inv 18, Inv 21 et Ref 1, et à 450°C-30 minutes pour Inv 24). Ainsi, les décalages des courbes par rapport à l'axe des abscisses des courbes de profondeurs résiduelles illustrent la déformation plastique résiduelle à l'issue du test.

La figure 6 révèle un comportement élastique accru des couches nitrurées des échantillons selon l'invention, comparé à celui des couches nitrurées obtenues sur Ref 1. En effet le retour élastique évalué par la différence entre les courbes de profondeurs de pénétration et de profondeurs résiduelles est significativement accru pour les échantillons contenant Cu (Inv 13 qui contient aussi du Cr) ou Nb (Inv 18). Il y a une variation d'altitude d'environ 15 µm d'épaisseur pour ces échantillons, et de 13 µm sur les nuances au Mn (Inv. 21) et Mn + Cr (Inv 24 qui contient aussi un peu de Si), donc deux fois plus importante que pour Ref 1 qui ne contient pas ces éléments d'alliage et dont la teneur en Co (16,50%) est supérieure à celles des échantillons selon l'invention testés (de l'ordre de 13%). Les teneurs en Mo sont de l'ordre de 5,0 à 5,30% pour tous ces échantillons.

De plus, les profondeurs résiduelles évaluées rd sont faibles pour les échantillons selon l'invention Inv 13, Inv 18, Inv 21, Inv 24, et légèrement meilleures que pour Ref 1.

Ce comportement traduit un retour élastique amélioré des couches nitrurées selon l'invention, qui présente un intérêt majeur dans le cadre d'applications où les pièces sont sollicitées en fatigue, puisqu'il permet de réduire les déformations plastiques de l'ensemble substrat/couche nitrurée, et ainsi de réduire les frottements et frictions engendrés dans certaines applications par les déformations plastiques d'assemblages nécessitant des dimensions précises.

Ainsi pour l'application aux courroies CVT, qui sont constituées d'une superposition d'anneaux en acier maraging laminés à froid, et qui sont soumis à une fatigue en flexion et en traction par le couple transmis du moteur, l'écart entre chaque anneau assure la lubrification de l'ensemble, et n'accepte pas de déformation plastique qui risquerait d'endommager les anneaux en sollicitations cycliques. A l'issue de chaque cycle de sollicitation, les matériaux nitrurés selon l'invention sont moins déformés plastiquement, n'induisant ainsi pas de déformations plastiques cumulées des pièces dans le temps, qui pourraient à terme altérer les durées de vie en fatigue des matériaux nitrurés de référence.

Ainsi la figure 6 confirme une déformation plastique sous faible charge, 10 N, plus importante des couche nitrurées issues de Ref 1 par rapport à celles obtenues sur les échantillons selon l'invention. C'est ce que montre l'écart par rapport à l'axe horizontal a des différentes courbes de pénétrations résiduelles.

Ainsi, Ref 1 semble se déformer moins que les nuances selon l'invention lors du scratch test (comme le montrent leurs profondeurs de pénétration relatives), mais les mécanismes de déformation mis en oeuvre ne sont pas totalement les mêmes, et les contraintes résiduelles à l'issue de ces sollicitations n'engendrent pas les mêmes effets. Ainsi, si la déformation engendrée sur Ref 1 au cours de l'essai semble moins importante, (par la profondeur de pénétration évaluée), sa résultante à l'issue de l'essai présente une composante plastique accrue par rapport aux échantillons selon l'invention, ce qui est dommageable pour les applications prioritairement visées par l'invention.

Les profondeurs de pénétration observées sur les échantillons selon l'invention s'avèrent essentiellement élastiques à la différence de Ref 1 qui présente un moindre retour élastique sous faible charge.

Ces critères de comportement de la surface nitrurée, associés à une population inclusionnaire contrôlée et aux propriétés mécaniques inhérentes à la composition de l'acier, n'étaient pas mis en évidence par des précédentes études conduites sur les aciers maraging du type général dont relève l'invention, en particulier dans la perspective d'une utilisation pour courroies de transmission de type CVT.

De manière générale, les aciers selon l'invention présentent dans différentes conditions de nitruration des performances économiques accrues et des propriétés d'usage au moins égales, voire accrues, par rapport aux aciers de référence relevant de l'art antérieur, dans la mesure où la couche de nitruration est plus aisément contrôlable :
- pour sa composition, en particulier concernant l'existence ou non de couches de combinaison ;
- pour son épaisseur ;
- pour les niveaux de dureté accessibles dans des conditions de nitruration données ;
- pour la distribution dans l'épaisseur de la couche des teneurs en azote, des phases précipitées, de leur nature et de leur répartition, ainsi que des niveaux de dureté, des contraintes résiduelles ;
- par un niveau réduit (quasi nul) de déformation plastique induite dans ces couches nitrurées, sollicitées sous faible charge ;
- pour la facilité et l'économie des conditions de mise en oeuvre industrielle de la nitruration, à propriétés obtenues égales par rapport aux nuances de référence, que la nitruration s'effectue par plasma ou, surtout, par voie gazeuse.

Des applications privilégiées de l'invention sont, notamment :
- pour des produits issus de demi-produits laminés à chaud ou mis en forme à chaud, des arbres de turbine ou des pièces de transmission en général ; mais aussi des pales de machines tournantes (éoliennes, centrifugeuses...)
- pour des produits issus de tôles ou bandes laminées à froid, des éléments de courroies de transmission de véhicules ou de machines tournantes telles que des machines-outils, en particulier de courroies pour transmissions automatiques de véhicules automobiles de type CVT.

## Revendications

1. Acier, **caractérisé en ce que** sa composition est, en pourcentages pondéraux :
- 10,0% ≤ Ni ≤ 24,5%;
- 1,0% ≤ Mo ≤ 12,0%;
- 1,0% ≤ Co ≤ 18,0% ;
- 14,0% ≤ Mo + Co + Si + Mn + Cu + W + V + Nb + Zr + Y + Ta + Cr+C + AI + B + Ti + N ≤ 29,0%;
- 25,0% ≤ Ni + Co + Mo ≤ 40,0% ;
- traces ≤ Al ≤ 2,0% ;
- traces ≤ Ti ≤ 0,1% ;
- traces ≤ N ≤ 0,010% ;
- traces ≤ Si ≤ 2,0% ;
- traces ≤ Mn ≤ 13,0% ;
- traces ≤ C ≤ 0,03% ;
- traces ≤ S ≤ 0,0020% ;
- traces ≤ P ≤ 0,005% ;
- traces ≤ B ≤ 0,01 % ;
- traces ≤ H ≤ 0,0005% ;
- traces ≤ O ≤ 0,03% ;
- traces ≤ Cr ≤ 5,0%;
- traces ≤ Cu ≤ 4% ;
- traces ≤ W ≤ 6,0% ;
- traces ≤ Zr ≤ 4,0% ;
- traces ≤ Ca ≤ 0,1% ;
- traces ≤ Mg ≤ 0,8% ;
- traces ≤ Nb ≤ 4,0% ;
- traces ≤ V ≤ 4,0% ;
- traces ≤ Ta ≤ 4,0% ;
- traces ≤ Y ≤ 4,0% ;
- Si + Mn ≥ 0,13% ;
- 0,14% ≤ Al + Si + Cu + Nb + Mn + V + Ta + Cr + W + C + B + Y + Zr + Ti + N ≤ 8,0% ;
le reste étant du fer et des impuretés résultant de l'élaboration ;
et **en ce que** la population inclusionnaire, observée par analyse d'image à partir d'images obtenues par microscopie électronique à balayage sur une surface polie de 650 mm² si l'acier est sous forme d'une pièce transformée à chaud ou d'une tôle laminée à chaud, et de 800 mm² si l'acier est sous forme d'une tôle laminée à froid, ne comporte pas d'inclusions non-métalliques de diamètre équivalent supérieur à 10 µm,
les inclusions non-métalliques étant les oxydes, les sulfures et les nitrures.

2. Produit en acier ayant subi une transformation à chaud et ayant été éventuellement traité thermiquement, **caractérisé en ce que** sa composition est, en pourcentages pondéraux :
- 10,0% ≤ Ni ≤ 24,5%;
- 1,0% ≤ Mo ≤ 12,0%;
- 1,0% ≤ Co ≤ 18,0%;
- 14,0% ≤ Mo + Co + Si + Mn + Cu + W + V + Nb + Zr + Y + Ta + Cr + C + AI + B + Ti + N ≤ 29,0%;
- 25,0% ≤ Ni + Co + Mo ≤ 40,0%
- traces ≤ Al ≤ 2,0%;
- traces ≤ Ti ≤ 0,1% ;
- traces ≤ N ≤ 0,010% ;
- traces ≤ Si ≤ 2,0% ;
- traces ≤ Mn ≤ 13,0% ;
- traces ≤ C ≤ 0,03% ;
- traces ≤ S ≤ 0,0020% ;
- traces ≤ P ≤ 0,005% ;
- traces ≤ B ≤ 0,01 % ;
- traces ≤ H ≤ 0,0005% ;
- traces ≤ O ≤ 0,03% ;
- traces ≤ Cr ≤ 5,0%, ;
- traces ≤ Cu ≤ 4% ;
- traces ≤ W ≤ 6,0% ;
- traces ≤ Zr ≤ 4,0% ;
- traces ≤ Ca ≤ 0,1% ;
- traces ≤ Mg ≤ 0,8% ;
- traces ≤ Nb ≤ 4,0% ;
- traces ≤ V ≤ 4,0% ;
- traces ≤ Ta ≤ 4,0% ;
- traces ≤ Y ≤ 4,0% ;
- Si + Mn ≥ 0,13% ;
- 0,14% ≤ Al + Si + Cu + Nb + Mn + V + Ta + Cr + W + C + B + Y+ Zr + Ti + N ≤ 8,0% ;
le reste étant du fer et des impuretés résultant de l'élaboration ;
et **en ce que** la population inclusionnaire, observée par analyse d'image à partir d'images obtenues par microscopie électronique à balayage sur une surface polie de 650 mm² d'une pièce transformée à chaud ou d'une tôle laminée à chaud, ne comporte pas d'inclusions non-métalliques de diamètre équivalent supérieur à 10 µm,
les inclusions non-métalliques étant les oxydes, les sulfures et les nitrures.

3. Produit en acier ayant subi une transformation à chaud selon la revendication 2, éventuellement traité thermiquement, **caractérisé en ce qu'**il a une structure martensitique à au moins 70%, une résistance à la traction supérieure ou égale à 2030 MPa, une limite élastique conventionnelle supérieure ou égale à 2000 MPa et un allongement réparti supérieur ou égal à 1%, et une dureté Vickers supérieure ou égale à 285 Hv10, cette dureté étant évaluée en section du produit transformé à chaud.

4. Tôle ou bande laminée à froid, en acier, **caractérisée en ce que** sa composition est, en pourcentages pondéraux ;
- 10,0% ≤ Ni ≤ 24,5%;
- 1,0% ≤ Mo ≤ 12,0%;
- 1,0% ≤ Co ≤ 18,0%;
- 14,0% ≤ Mo + Co + Si + Mn + Cu + W + V + Nb + Zr + Y + Ta + Cr + C + AI + B + Ti + N ≤ 29,0%;
- 25,0% ≤ Ni + Co + Mo ≤ 40,0%
- traces ≤ Al ≤ 2.0% ;
- traces ≤ Ti ≤ 0,1% ;
- traces ≤ N ≤ 0,010% ;
- traces ≤ Si ≤ 2,0%;
- traces ≤ Mn ≤ 13,0% ;
- traces ≤ C ≤ 0,03% ;
- traces ≤ S ≤ 0,0020%;
- traces ≤ P ≤ 0,005% ;
- traces ≤ B ≤ 0,01% ;
- traces ≤ H ≤ 0,0005% ;
- traces ≤ O ≤ 0,03% ;
- traces ≤ Cr ≤ 5,0%;
- traces ≤ Cu ≤ 4% ;
- traces ≤ W ≤ 6,0% ;
- traces ≤ Zr ≤ 4,0% ;
- traces ≤ Ca ≤ 0,1% ;
- traces ≤ Mg ≤ 0,8% ;
- traces ≤ Nb ≤ 4,0% ;
- traces ≤ V ≤ 4,0% ;
- traces ≤ Ta ≤ 4,0% ;
- traces ≤ Y ≤ 4,0% ;
- Si + Mn ≥ 0,13% ;
- 0,14% ≤ AI + Si + Cu + Nb + Mn + V + Ta + Cr + W + C + B + Y + Zr + Ti + N ≤ 8,0% ;
le reste étant du fer et des impuretés résultant de l'élaboration ;
et **en ce que** la population inclusionnaire, observée par analyse d'image à partir d'images obtenues par microscopie électronique à balayage sur une surface polie de 800 mm², ne comporte pas d'inclusions non-métalliques de diamètre équivalent supérieur à 10 µm,
les inclusions non-métalliques étant les oxydes, les sulfures et les nitrures.

5. Tôle ou bande laminée à froid selon la revendication 4, **caractérisée en ce qu'**elle a subi au moins un traitement thermique après le laminage à froid afin de durcir le matériau.

6. Tôle ou bande laminée à chaud ou à froid selon l'une des revendications 2 à 5, **caractérisée en ce qu'**elle a une résistance à la traction supérieure ou égale à 2030 MPa, une limite élastique conventionnelle supérieure ou égale à 2000 MPa et un allongement réparti supérieur ou égal à 1%.

7. Produit en acier, **caractérisé en ce qu'**il est issu d'une tôle ou bande laminée à chaud ou à froid selon l'une des revendications 2 à 6, éventuellement mise en forme, et **en ce qu'**il a subi un traitement superficiel pour l'amélioration de sa résistance aux sollicitations dynamiques.

8. Produit selon la revendication 7, **caractérisé en ce que** ledit traitement superficiel est choisi parmi une cémentation, une nitruration gazeuse, une nitruration ionique, une carbonitruration, un grenaillage.

9. Arbre de turbine, **caractérisé en ce que** ledit arbre comporte au moins un élément réalisé à partir d'un produit transformé à chaud selon la revendication 2 ou 3.

10. Pièce de transmission transformée à chaud, **caractérisée en ce que** ladite pièce comporte au moins un élément réalisé à partir d'un produit transformé à chaud selon la revendication 2 ou 3.

11. Courroie de transmission, **caractérisée en ce qu'**elle comporte au moins un élément réalisé à partir d'une tôle ou bande laminée à froid selon l'une des revendications 4 à 8, ou d'un produit issu d'une telle tôle ou bande.

12. Courroie de transmission selon la revendication 11, **caractérisée en ce qu'**il s'agit d'une courroie de transmission de type CVT pour véhicule automobile.

13. Produit en acier ayant subi une transformation à chaud et ayant été éventuellement traité thermiquement selon l'une des revendications 2 ou 3, ou une tôle ou bande laminée à froid et éventuellement traitée thermiquement selon l'une des revendications 4 à 6, **caractérisé en ce que** la taille de grain du produit ou de la tôle ou bande est de 5 ASTM ou plus fin.

## Patentansprüche

1. Stahl, **dadurch gekennzeichnet, dass** seine Zusammensetzung in Gewichtsprozent beträgt:
- 10,0 % ≤ Ni ≤ 24,5 %,
- 1,0 %≤ Mo ≤ 12,0 %;
- 1,0 % ≤ Co ≤18,0 %;
- 14,0 % ≤ Mo + Co + Si + Mn + Cu + W + V + Nb + Zr + Y + Ta + Cr + C + AI + B + Ti + N ≤ 29,0 %;
- 25,0% ≤ Ni + Co + Mo ≤ 40,0 %;
- Spuren ≤ AI ≤ 2,0 %;
- Spuren ≤ Ti ≤ 0,1 %;
- Spuren ≤ N ≤ 0,010 %;
- Spuren ≤ Si ≤ 2,0 %;
- Spuren ≤ Mn ≤ 13,0 %;
- Spuren ≤ C ≤ 0,03 %;
- Spuren ≤ S ≤ 0,0020 %;
- Spuren ≤ P ≤ 0,005 %;
- Spuren ≤ B ≤ 0,01 %;
- Spuren ≤ H ≤ 0,0005 %;
- Spuren ≤ O ≤ 0,03 %;
- Spuren ≤ Cr ≤ 5,0 %;
- Spuren ≤ Cu ≤ 4 %;
- Spuren ≤ W ≤ 6,0 %;
- Spuren ≤ Zr ≤ 4,0 %;
- Spuren ≤ Ca ≤ 0,1 %;
- Spuren ≤ Mg ≤ 0,8 %;
- Spuren ≤ Nb ≤ 4,0 %;
- Spuren ≤ V ≤ 4,0 %;
- Spuren ≤ Ta ≤ 4,0 %;
- Spuren ≤ Y ≤ 4,0 %;
- Si + Mn ≥ 0,13 %;
- 0,14 % ≤ AI + Si + Cu + Nb + Mn + V + Ta + Cr + W + C + B + Y + Zr + Ti + N ≤ 8,0 %;
wobei der Rest Eisen und Verunreinigungen ist, die aus der Verarbeitung resultieren;
und dass die Einschlusspopulation, beobachtet durch Bildanalyse ausgehend von Bildern, die durch Rasterelektronenmikroskopie erhalten wurde, auf einer polierten Oberfläche von 650 mm², wenn der Stahl in Form eines warm umgeformten Teils oder eines warm gewalzten Blechs vorliegt, und von 800 mm², wenn der Stahl in Form eines kalt gewalzten Blechs vorliegt, keine nichtmetallischen Einschlüsse mit einem äquivalenten Durchmesser von über 10 µm aufweist,
wobei die nichtmetallischen Einschlüsse Oxide, Sulfide und Nitride sind.

2. Stahlprodukt, das einer Warmumformung unterzogen und gegebenenfalls wärmebehandelt wurde, **dadurch gekennzeichnet, dass** seine Zusammensetzung in Gewichtsprozent beträgt:
- 10,0 % ≤ Ni ≤ 24,5 %,
- 1,0 %≤ Mo ≤ 12,0 %;
- 1,0 % ≤ Co ≤ 18,0 %;
- 14,0 % ≤ Mo + Co + Si + Mn + Cu + W + V + Nb + Zr + Y + Ta + Cr + C + AI + B + Ti + N ≤ 29,0 %;
- 25,0% ≤ Ni + Co + Mo ≤ 40,0 %;
- Spuren ≤ AI ≤ 2,0 %;
- Spuren ≤ Ti ≤ 0,1 %;
- Spuren ≤ N ≤ 0,010 %;
- Spuren ≤ Si ≤ 2,0 %;
- Spuren ≤ Mn ≤ 13,0 %;
- Spuren ≤ C ≤ 0,03 %;
- Spuren ≤ S ≤ 0,0020 %;
- Spuren ≤ P ≤ 0,005 %;
- Spuren ≤ B ≤ 0,01 %;
- Spuren ≤ H ≤ 0,0005 %;
- Spuren ≤ O ≤ 0,03 %;
- Spuren ≤ Cr ≤ 5,0 %;
- Spuren ≤ Cu ≤ 4 %;
- Spuren ≤ W ≤ 6,0 %;
- Spuren ≤ Zr ≤ 4,0 %;
- Spuren ≤ Ca ≤ 0,1 %;
- Spuren ≤ Mg ≤ 0,8 %;
- Spuren ≤ Nb ≤ 4,0 %;
- Spuren ≤ V ≤ 4,0 %;
- Spuren ≤ Ta ≤ 4,0 %;
- Spuren ≤ Y ≤ 4,0 %;
- Si + Mn ≥ 0,13 %;
- 0,14 % ≤ AI + Si + Cu + Nb + Mn + V + Ta + Cr + W + C + B + Y + Zr + Ti + N ≤ 8,0 %;
wobei der Rest Eisen und Verunreinigungen ist, die aus der Verarbeitung resultieren;
und dass die Einschlusspopulation, beobachtet durch Bildanalyse ausgehend von Bildern, die durch Rasterelektronenmikroskopie erhalten wurden, auf einer polierten Oberfläche von 650 mm² eines warm umgeformten Teils oder eines warm gewalzten Blechs, keine nichtmetallischen Einschlüsse mit einem äquivalenten Durchmesser von über 10 µm aufweist,
wobei die nichtmetallischen Einschlüsse Oxide, Sulfide und Nitride sind.

3. Warm umgeformtes Stahlprodukt nach Anspruch 2, gegebenenfalls wärmebehandelt, **dadurch gekennzeichnet, dass** es eine martensitische Struktur von mindestens 70 %, eine Zugfestigkeit von über oder gleich 2030 MPa, eine konventionelle Streckgrenze von über oder gleich 2000 MPa und eine verteilte Dehnung von über oder gleich 1 % und eine Vickers-Härte von über oder gleich 285 Hv10 aufweist, wobei diese Härte im Querschnitt des warm umgeformten Produkts ermittelt wird.

4. Kalt gewalztes Blech oder Band aus Stahl, **dadurch gekennzeichnet, dass** seine Zusammensetzung in Gewichtsprozenten beträgt;
- 10,0 % ≤ Ni ≤ 24,5 %,
- 1,0 %≤ Mo ≤ 12,0 %;
- 1,0 % ≤ Co ≤ 18,0 %;
- 14,0 % ≤ Mo + Co + Si + Mn + Cu + W + V + Nb + Zr + Y + Ta + Cr + C + AI + B + Ti + N ≤ 29,0 %;
- 25,0% ≤ Ni + Co + Mo ≤ 40,0 %;
- Spuren ≤ AI ≤ 2,0 %;
- Spuren ≤ Ti ≤ 0,1 %;
- Spuren ≤ N ≤ 0,010 %;
- Spuren ≤ Si ≤ 2,0 %;
- Spuren ≤ Mn ≤ 13,0 %;
- Spuren ≤ C ≤ 0,03 %;
- Spuren ≤ S ≤ 0,0020 %;
- Spuren ≤ P ≤ 0,005 %;
- Spuren ≤ B ≤ 0,01 %;
- Spuren ≤ H ≤ 0,0005 %;
- Spuren ≤ O ≤ 0,03 %;
- Spuren ≤ Cr ≤ 5,0 %;
- Spuren ≤ Cu ≤ 4 %;
- Spuren ≤ W ≤ 6,0 %;
- Spuren ≤ Zr ≤ 4,0 %;
- Spuren ≤ Ca ≤ 0,1 %;
- Spuren ≤ Mg ≤ 0,8 %;
- Spuren ≤ Nb ≤ 4,0 %;
- Spuren ≤ V ≤ 4,0 %;
- Spuren ≤ Ta ≤ 4,0 %;
- Spuren ≤ Y ≤ 4,0 %;
- Si + Mn ≥ 0,13 %;
- 0,14 % ≤ AI + Si + Cu + Nb + Mn + V + Ta + Cr + W + C + B + Y + Zr + Ti + N ≤ 8,0 %;
wobei der Rest Eisen und Verunreinigungen ist, die aus der Verarbeitung resultieren;
und dass die Einschlusspopulation, beobachtet durch Bildanalyse ausgehend von Bildern, die durch Rasterelektronenmikroskopie erhalten wurden, auf einer polierten Oberfläche von 800 mm², keine nichtmetallischen Einschlüsse mit einem äquivalenten Durchmesser von über 10 µm aufweist,
wobei die nichtmetallischen Einschlüsse Oxide, Sulfide und Nitride sind.

5. Kalt gewalztes Blech oder Band nach Anspruch 4, **dadurch gekennzeichnet, dass** es nach dem Kaltwalzen mindestens einer Wärmebehandlung unterzogen wurde, um das Material zu härten.

6. Warm oder kalt gewalztes Blech oder Band nach einem der Ansprüche 2 bis 5, **dadurch gekennzeichnet, dass** es eine Zugfestigkeit von über oder gleich 2030 MPa, eine konventionelle Streckgrenze von über oder gleich 2000 MPa und eine verteilte Dehnung von über oder gleich 1 % aufweist.

7. Stahlprodukt, **dadurch gekennzeichnet, dass** es aus einem warm oder kalt gewalzten Blech oder Band nach einem der Ansprüche 2 bis 6 hervorgegangen ist, das gegebenenfalls geformt wurde, und dass es einer Oberflächenbehandlung zur Verbesserung seiner Widerstandsfähigkeit gegenüber dynamischen Beanspruchungen unterzogen wurde.

8. Produkt nach Anspruch 7, **dadurch gekennzeichnet, dass** die Oberflächenbehandlung aus Einsatzhärten, Gasnitrieren, lonennitrieren, Carbonitrieren, Kugelstrahlen ausgewählt ist.

9. Turbinenwelle, **dadurch gekennzeichnet, dass** die Welle mindestens ein Element enthält, das aus einem warm umgeformten Produkt nach Anspruch 2 oder 3 hergestellt ist.

10. Warm umgeformtes Übertragungsteil, **dadurch gekennzeichnet, dass** das Teil mindestens ein Element enthält, das aus einem warm umgeformten Produkt nach Anspruch 2 oder 3 hergestellt ist.

11. Treibriemen, **dadurch gekennzeichnet, dass** er mindestens ein Element aufweist, das aus einem kalt gewalzten Blech oder Band nach einem der Ansprüche 4 bis 8 oder aus einem Produkt aus einem solchen Blech oder Band hergestellt ist.

12. Treibriemen nach Anspruch 11, **dadurch gekennzeichnet, dass** es sich um einen Treibriemen vom Typ CVT für Kraftfahrzeuge handelt.

13. Warm umgeformtes und gegebenenfalls wärmebehandeltes Stahlprodukt nach einem der Ansprüche 2 oder 3, oder kalt gewalztes und gegebenenfalls wärmebehandeltes Blech oder Band nach einem der Ansprüche 4 bis 6, **dadurch gekennzeichnet, dass** die Korngröße des Produkts oder des Blechs oder Bands 5 ASTM oder feiner ist.

## Claims

1. Steel, **characterized in that** it has the following composition in weight percent:
- 10.0 % ≤ Ni ≤ 24.5 %;
- 1.0 % ≤ Mo ≤ 12.0 %;
- 1.0 % ≤ Co ≤ 18.0 %;
- 14.0 % ≤ Mo + Co + Si + Mn + Cu + W + V + Nb + Zr + Y + Ta + Cr + C + Al + B + Ti + N ≤ 29.0 %;
- 25.0 % ≤ Ni + Co + Mo ≤ 40.0%;
- traces ≤ Al ≤ 2.0 %;
- traces ≤ Ti ≤ 0.1 %;
- traces ≤ N ≤ 0.010 %;
- traces ≤ Si ≤ 2.0 %;
- traces ≤ Mn ≤ 13.0 %;
- traces ≤ C ≤ 0.03 %;
- traces ≤ S ≤ 0.0020 %;
- traces ≤ P ≤ 0.005 %;
- traces ≤ B ≤ 0.01 %;
- traces ≤ H ≤ 0.0005 %;
- traces ≤ O ≤ 0.03 %;
- traces ≤ Cr ≤ 5.0 %;
- traces ≤ Cu ≤ 4 %;
- traces ≤ W ≤ 6.0 %;
- traces ≤ Zr ≤ 4.0 %;
- traces ≤ Ca ≤ 0.1 %;
- traces ≤ Mg ≤ 0.8%;
- traces ≤ Nb ≤ 4.0 %;
- traces ≤ V ≤ 4.0 %;
- traces ≤ Ta ≤ 4.0 %;
- traces ≤ Y ≤ 4.0 %;
- Si + Mn ≥ 0.13% ;
- 0.14 % ≤ Al + Si + Cu + Nb + Mn + V + Ta + Cr + W + C + B + Y + Zr + Ti + N ≤ 8.0 %;
the remainder being iron and manufacturing impurities;
and **in that** the inclusion population observed under image analysis on a polished surface of 650 mm² if the steel is in the form of a hot worked part or hot rolled sheet, and 800 mm² if the steel is in the form of cold rolled sheet, does not contain non-metallic inclusions having an equivalent diameter larger than 10 µm,
the metallic inclusions being oxides, sulphides and nitrides.

2. Steel product that is hot worked and optionally heat treated, **characterized in that** it has the following composition in weight percent:
- 10.0 % ≤ Ni ≤ 24.5 %;
- 1.0 % ≤ Mo ≤ 12.0 %;
- 1.0 % ≤ Co ≤ 18.0 %;
- 14.0 % ≤ Mo + Co + Si + Mn + Cu + W + V + Nb + Zr + Y + Ta + Cr + C + Al + B + Ti + N ≤ 29.0 %;
- 25.0 % ≤ Ni + Co + Mo ≤ 40.0%;
- traces ≤ Al ≤ 2.0 %;
- traces ≤ Ti ≤ 0.1 %;
- traces ≤ N ≤ 0.010 %;
- traces ≤ Si ≤ 2.0 %;
- traces ≤ Mn ≤ 13.0 %;
- traces ≤ C ≤ 0.03 %;
- traces ≤ S ≤ 0.0020 %;
- traces ≤ P ≤ 0.005 %;
- traces ≤ B ≤ 0.01 %;
- traces ≤ H ≤ 0.0005 %;
- traces ≤ O ≤ 0.03 %;
- traces ≤ Cr ≤ 5.0 %;
- traces ≤ Cu ≤ 4 %;
- traces ≤ W ≤ 6.0 %;
- traces ≤ Zr ≤ 4.0 %;
- traces ≤ Ca ≤ 0.1 %;
- traces ≤ Mg ≤ 0.8%;
- traces ≤ Nb ≤ 4.0 %;
- traces ≤ V ≤ 4.0 %;
- traces ≤ Ta ≤ 4.0 %;
- traces ≤ Y ≤ 4.0 %;
- Si + Mn ≥ 0.13% ;
- 0.14 % ≤ Al + Si + Cu + Nb + Mn + V + Ta + Cr + W + C + B + Y + Zr + Ti + N ≤ 8.0 %;
the remainder being iron and manufacturing impurities;
and **in that** the inclusion population observed under image analysis on a polished surface of 650 mm² of a hot worked part or of hot rolled sheet does not contain non-metallic inclusions having an equivalent diameter larger than 10 µm,
the metallic inclusions being oxides, sulphides and nitrides.

3. The steel product hot worked according to claim 2, optionally heat treated, **characterized in that** it has an at least 70 % martensitic structure, a tensile strength of 2030 MPa or higher, an offset yield strength of 2000 MPa or higher and a uniform elongation of 1 % or higher, and Vickers hardness of 285 Hv10 or higher, this hardness being evaluated along a cross-section of the hot worked product.

4. Cold rolled sheet or strip made of steel, **characterized in that** it has the following composition in weight percent:
- 10.0 % ≤ Ni ≤ 24.5 %;
- 1.0 % ≤ Mo ≤ 12.0 %;
- 1.0 % ≤ Co ≤ 18.0 %;
- 14.0 % ≤ Mo + Co + Si + Mn + Cu + W + V + Nb + Zr + Y + Ta + Cr + C + Al + B + Ti + N ≤ 29.0 %;
- 25.0 % ≤ Ni + Co + Mo ≤ 40.0%;
- traces ≤ Al ≤ 2.0 %;
- traces ≤ Ti ≤ 0.1 %;
- traces ≤ N ≤ 0.010 %;
- traces ≤ Si ≤ 2.0 %;
- traces ≤ Mn ≤ 13.0 %;
- traces ≤ C ≤ 0.03 %;
- traces ≤ S ≤ 0.0020 %;
- traces ≤ P ≤ 0.005 %;
- traces ≤ B ≤ 0.01 %;
- traces ≤ H ≤ 0.0005 %;
- traces ≤ O ≤ 0.03 %;
- traces ≤ Cr ≤ 5.0 %;
- traces ≤ Cu ≤ 4 %;
- traces ≤ W ≤ 6.0 %;
- traces ≤ Zr ≤ 4.0 %;
- traces ≤ Ca ≤ 0.1 %;
- traces ≤ Mg ≤ 0.8%;
- traces ≤ Nb ≤ 4.0 %;
- traces ≤ V ≤ 4.0 %;
- traces ≤ Ta ≤ 4.0 %;
- traces ≤ Y ≤ 4.0 %;
- Si + Mn ≥ 0.13% ;
- 0.14 % ≤ Al + Si + Cu + Nb + Mn + V + Ta + Cr + W + C + B + Y + Zr + Ti + N ≤ 8.0 %;
the remainder being iron and manufacturing impurities;
and **in that** the inclusion population, observed under image analysis on a polished surface of 800 mm², does not contain non-metallic inclusions having an equivalent diameter larger than 10 µm,
the metallic inclusions being oxides, sulphides and nitrides.

5. Cold rolled sheet or strip according to claim 4, **characterized in that** it has been subjected to at least one heat treatment after cold rolling to harden the material.

6. Hot or cold rolled sheet or strip according to one of claims 2 to 5, **characterized in that** it has a tensile strength 2030 MPa or higher, an offset yield strength of 2000 MPa or higher, and uniform elongation of 1 % or higher.

7. Steel product, **characterized in that** it is derived from hot or cold rolled sheet or strip according to one of claims 2 to 6, optionally formed, and **in that** it has undergone surface treatment to improve the dynamic strength thereof.

8. The product according to claim 7, **characterized in that** said surface treatment is selected from among carburization, gas nitriding, ionic nitriding, carbonitriding and shot peening.

9. Turbine shaft, **characterized in that** said shaft comprises at least one element made from a hot worked product according to claim 2 or 3.

10. Hot formed transmission part, **characterized in that** said part comprises at least one element made from a hot worked product according to claim 2 or 3.

11. Transmission belt, **characterized in that** it comprises at least one element made from cold rolled sheet or strip according to one of claims 4 to 8, or from a product derived from said sheet or strip.

12. The transmission belt according to claim 11, **characterized in that** it is an automotive transmission belt of CVT type.

13. Steel product that has been hot worked and optionally heat treated according to one of claims 2 or 3, or sheet or strip that is cold rolled and optionally heat treated according to one of claims 4 to 6, **characterized in that** the grain size of the product or of the sheet or strip is 5 ASTM or finer.
